# EUROPEAN PATENT APPLICATION

(11) **EP 4 404 637 A1**
(43) Date of publication of application: **24.07.2024**
(21) Application number: 22886149.8
(22) Date of filing: 28.10.2022
(51) Int. Cl.: H04W 52/02

(54) **COMMUNICATION METHOD AND APPARATUS**

(30) Priority: 30.10.2021 CN 202111278347
(71) Applicant: Huawei Technologies Co., Ltd., Shenzhen, Guangdong 518129 (CN)
(72) Inventor: WEI, Dongdong, Shenzhen, Guangdong 518129 (CN); LYU, Yongxia, Shenzhen, Guangdong 518129 (CN); WANG, Ting, Shenzhen, Guangdong 518129 (CN)
(74) Representative: Gill Jennings & Every LLP
(86) International application number: PCT/CN2022/128428
(87) International publication number: WO 2023/072274

(57) **Abstract**

The application provides a communication method and apparatus, and may be applied to a new radio system or a next-generation general-purpose system, to reduce energy consumption of a terminal and increase a battery life. The method includes: A first access network device determines first information, and sends the first information to a terminal. The first information indicates that a first time unit is in an off state or an on state.

## Description

The application claims priority to Chinese Patent Application No. 202111278347.9, filed with the China National Intellectual Property Administration on October 30, 2021 and entitled "COMMUNICATION METHOD AND APPARATUS", which is incorporated herein by reference in its entirety.

### TECHNICAL FIELD

The application relates to the communication field, and in particular, to a communication method and apparatus.

### BACKGROUND

In a new radio (new radio, NR) system, a base station may not use some time domain resources in consideration of services or overheads. For example, the base station does not send downlink (downlink) data such as a physical downlink control channel (physical downlink control channel, PDCCH) or a physical downlink shared channel (physical downlink shared channel, PDSCH) on these time domain resources, or does not further configure some time domain resources configured as flexible (flexible) resources, for example, does not configure these time domain resources as downlink time domain resources or uplink (uplink) time domain resources.

However, a terminal still performs receiving detection on these time domain resources, to determine whether downlink data is received or whether these time domain resources are further configured. Consequently, energy consumption of the terminal increases, and a battery life is affected.

### SUMMARY

Embodiments of the application provide a communication method and apparatus, to reduce energy consumption of a terminal and increase a battery life.

The following technical solutions are applied in the application.

According to a first aspect, a communication method is provided. The method includes: A first access network device determines first information, and sends the first information to a terminal. The first information indicates that a first time unit is in an off state or an on state.

It can be learned from the method in the first aspect that, the first access network device sends the first information to the terminal, to indicate that the first time unit is in the off state or the on state, so that the terminal may receive a downlink signal based on the first information. For example, if the first time unit is in the off state, the terminal may not receive the downlink signal in the first time unit, in other words, may not perform receiving detection, to reduce energy consumption of the terminal and increase a battery life.

In a possible implementation, the first information is carried in one or more of the following messages: system information, a radio resource control message, or a downlink control information message, to implement signaling multiplexing, and reduce communication overheads. For example, the system information may be a system information block (system information block, SIB) 1, a SIB2, or the like. The radio resource control message may be a radio resource control (radio resource control, RRC) message. The downlink control information message may be a downlink control information (downlink control information, DCI) message.

Optionally, the system information indicates that the first time unit is for uplink transmission, or is not for uplink transmission.

Optionally, the downlink control information message may be a message scrambled based on a preset identifier. Specifically, that the first access network device sends the first information to a terminal may include: The first access network device scrambles the downlink control information message based on the preset identifier to send the scrambled downlink control information message to the terminal, to improve communication security and reliability.

Optionally, the downlink control information message is a device group (group)-level downlink control information message. To be specific, the first access network device may notify all terminals in a group by sending the downlink control information message once, so that a quantity of signaling sending times can be decreased, and the communication overheads can be further reduced.

In a possible implementation, the method in the first aspect may further include: The first access network device sends second information to the terminal, where the second information indicates that a second time unit is in the off state or the on state.

Optionally, the second information and the first information are carried in a same message, to reduce the communication overheads. Alternatively, the second information and the first information are carried in different messages, to more flexibly indicate the off state or the on state of each time unit.

Optionally, that the second information and the first information are carried in different messages means: The first information is carried in the system information, and the second information is carried in the radio resource control message or the downlink control information message; or the first information is carried in the radio resource control message, and the second information is carried in the downlink control information message. It can be learned that the message carrying the first information and the message carrying the second information are at different levels, to indicate the off state or the on state of the first time unit and the second time unit in a multi-layer nested manner, so that the first access network device does not repeatedly send signaling at a same level, to improve communication efficiency.

Optionally, the second time unit and the first time unit may be different time units. The first time unit and the second time unit may be different time units at a same granularity, for example, different slots (slot) or different symbols (symbol), to flexibly indicate respective off states or on states of the different time units at the same granularity. Alternatively, the first time unit and the second time unit may be time units at different granularities, for example, a slot and a symbol in the slot, or a slot and a symbol in another slot, to flexibly indicate respective off states or on states of the different time units at different granularities. Alternatively, the first time unit and the second time unit may be a same time unit. To be specific, for a time unit whose off state or on state is already indicated, the first access network device may continue to indicate a latest off state or on state of the time unit, so that when the off state or the on state of the time unit changes, the terminal can be notified in time, to further reduce the energy consumption of the terminal and further increase the battery life.

In a possible implementation, the method in the first aspect may further include: The first access network device sends third information to the terminal, where the third information indicates that a third time unit is in one or more of the following states: the off state, a downlink state, an uplink state, a receive state, a transmit state, or a flexible state, in other words, indicates the uplink/downlink/transmit/receive state of the third time unit, so that when the third time unit is in the on state, the terminal may receive and send data in the third time unit.

Optionally, the third information and the first information are carried in a same message, or the third information and the second information are carried in a same message, to jointly indicate the off state, the on state, and the uplink/downlink/transmit/receive state of each time unit, to reduce the communication overheads. Alternatively, the third information and the first information are carried in different messages, or the third information and the second information are carried in different messages, to independently indicate the off state, the on state, and the uplink/downlink/transmit/receive state of each time unit, to improve indication flexibility.

Optionally, the first time unit and the third time unit are a same time unit, or the second time unit and the third time unit are a same time unit. To be specific, the first access network device may indicate a latest state of a specific time unit, so that when a status of the time unit changes, for example, changes from the off state to the uplink/downlink/transmit/receive state, the terminal can be notified in time. In this way, the terminal may receive and send data in time, to improve the communication reliability and reduce a communication delay.

In a possible implementation, the method in the first aspect may further include: The first access network device sends a configuration message to a second access network device, where the configuration message indicates the first information. Optionally, the configuration message may further indicate a periodicity in which the first time unit is located and a reference subcarrier spacing. In this way, the second access network device may adjust an uplink/downlink/transmit/receive state of a signal of the second access network device based on the configuration message, to avoid signal interference between the devices.

In a possible implementation, the method in the first aspect may further include: The first access network device sends fourth information to the terminal. The fourth information indicates that the first time unit is an uplink time unit or a downlink time unit. In this way, the terminal may determine, based on the fourth information, whether the off state of the first time unit is applicable to an uplink carrier or a downlink carrier, so that when the first time unit is off in an uplink direction, the terminal may still receive the downlink signal in the first time unit; or when the first time unit is off in a downlink direction, the terminal may still send an uplink signal in the first time unit, to balance energy saving and data communication.

According to a second aspect, a communication method is provided. The method includes: A terminal receives first information from a first access network device, and receives a downlink signal based on the first information. The first information indicates that a first time unit is in an off state or an on state.

In a possible implementation, if the terminal determines that the first time unit is in the off state, the terminal does not receive the downlink signal in the first time unit. Alternatively, if the terminal determines that the first time unit is in the on state, the terminal receives the downlink signal in the first time unit.

Optionally, if the terminal determines that the first time unit is in the off state, the terminal sends an uplink signal in the first time unit. In other words, when downlink transmission is off, the first time unit is reused for uplink transmission, to improve communication efficiency.

In a possible implementation, the first information is carried in one or more of the following messages: system information, a radio resource control message, or a downlink control information message.

Optionally, the system information indicates that the first time unit is for uplink transmission, or is not for uplink transmission.

Optionally, the downlink control information message is a device group-level downlink control information message.

In a possible implementation, the method in the second aspect may further include: The terminal receives second information from the first access network device, where the second information indicates that a second time unit is in the off state or the on state.

Optionally, the second information and the first information are carried in a same message, or are carried in different messages.

Optionally, that the second information and the first information are carried in different messages means: The first information is carried in the system information, and the second information is carried in the radio resource control message or the downlink control information message; or the first information is carried in the radio resource control message, and the second information is carried in the downlink control information message.

Optionally, the first time unit and the second time unit are a same time unit, or are different time units.

In a possible implementation, the method in the second aspect may further include: The terminal receives third information from the first access network device. The third information indicates that a third time unit is in one or more of the following states: the off state, a downlink state, an uplink state, a receive state, a transmit state, or a flexible state.

Optionally, the third information and the first information are carried in a same message, or are carried in different messages; or the third information and the second information are carried in a same message, or are carried in different messages.

Optionally, the first time unit and the third time unit are a same time unit, or the first time unit and the second time unit are a same time unit.

In addition, for technical effects of the method in the second aspect, refer to the technical effects of the method in the first aspect. Details are not described herein again.

According to a third aspect, a communication apparatus is provided. The apparatus includes a transceiver module and a processing module. The processing module is configured to determine first information. The transceiver module is configured to send the first information to a terminal. The first information indicates that a first time unit is in an off state or an on state.

In a possible implementation, the first information is carried in one or more of the following messages: system information, a radio resource control message, or a downlink control information message.

Optionally, the system information indicates that the first time unit is for uplink transmission, or is not for uplink transmission.

Optionally, the downlink control information message may be a message scrambled based on a preset identifier. Specifically, the processing module is further configured to scramble the downlink control information message based on the preset identifier, to control the transceiver module to send the scrambled downlink control information message to the terminal.

Optionally, the downlink control information message is a device group-level downlink control information message.

In a possible implementation, the transceiver module is further configured to send second information to the terminal, where the second information indicates that a second time unit is in the off state or the on state.

Optionally, the second information and the first information are carried in a same message, or are carried in different messages.

Optionally, that the second information and the first information are carried in different messages means: The first information is carried in the system information, and the second information is carried in the radio resource control message or the downlink control information message; or the first information is carried in the radio resource control message, and the second information is carried in the downlink control information message.

Optionally, the first time unit and the second time unit are a same time unit. Alternatively, the first time unit and the second time unit are different time units.

In a possible implementation, the transceiver module is further configured to send third information to the terminal. The third information indicates that a third time unit is in one or more of the following states: the off state, a downlink state, an uplink state, a receive state, a transmit state, or a flexible state.

Optionally, the third information and the first information are carried in a same message, or the third information and the second information are carried in a same message. Alternatively, the third information and the first information are carried in different messages, or the third information and the second information are carried in different messages.

Optionally, the first time unit and the third time unit are a same time unit, or the second time unit and the third time unit are a same time unit.

In a possible implementation, the transceiver module is further configured to send a configuration message to a second access network device, where the configuration message indicates the first information. Optionally, the configuration message may further indicate a periodicity in which the first time unit is located and a reference subcarrier spacing.

In a possible implementation, the transceiver module is further configured to send fourth information to the terminal. The fourth information indicates that the first time unit is an uplink time unit or a downlink time unit.

Optionally, the transceiver module may alternatively include a sending module and a receiving module. The sending module is configured to implement a sending function of the apparatus in the third aspect, and the receiving module is configured to implement a receiving function of the apparatus in the third aspect.

Optionally, the apparatus in the third aspect may further include a storage module, and the storage module stores a program or instructions. When the processing module executes the program or the instructions, the apparatus is enabled to perform the method in the first aspect.

It should be noted that the apparatus in the third aspect may be a network device, for example, an access network device, may be a chip (system) or another part or component that may be disposed in the network device, or may be an apparatus including the network device. This is not limited in the application.

In addition, for technical effects of the apparatus in the third aspect, refer to the technical effects of the method in the first aspect. Details are not described herein again.

According to a fourth aspect, a communication apparatus is provided. The apparatus includes a transceiver module and a processing module. The transceiver module is configured to receive first information from a first access network device. The processing module is configured to control, based on the first information, the transceiver module to receive a downlink signal. The first information indicates that a first time unit is in an off state or an on state.

In a possible implementation, if the apparatus in the fourth aspect determines that the first time unit is in the off state, the apparatus does not receive the downlink signal in the first time unit. Alternatively, if the apparatus in the fourth aspect determines that the first time unit is in the on state, the apparatus receives the downlink signal in the first time unit. Optionally, if the apparatus in the fourth aspect determines that the first time unit is in the off state, the apparatus sends an uplink signal in the first time unit.

In a possible implementation, the first information is carried in one or more of the following messages: system information, a radio resource control message, or a downlink control information message.

Optionally, the system information indicates that the first time unit is for uplink transmission, or is not for uplink transmission.

Optionally, the downlink control information message is a device group-level downlink control information message.

In a possible implementation, the transceiver module is further configured to receive second information from the first access network device, where the second information indicates that a second time unit is in the off state or the on state.

Optionally, the second information and the first information are carried in a same message, or are carried in different messages.

Optionally, that the second information and the first information are carried in different messages means: The first information is carried in the system information, and the second information is carried in the radio resource control message or the downlink control information message; or the first information is carried in the radio resource control message, and the second information is carried in the downlink control information message.

Optionally, the first time unit and the second time unit are a same time unit, or are different time units.

In a possible implementation, the transceiver module is further configured to receive third information from the first access network device. The third information indicates that a third time unit is in one or more of the following states: the off state, a downlink state, an uplink state, a receive state, a transmit state, or a flexible state.

Optionally, the third information and the first information are carried in a same message, or are carried in different messages; or the third information and the second information are carried in a same message, or are carried in different messages.

Optionally, the first time unit and the third time unit are a same time unit, or the first time unit and the second time unit are a same time unit.

Optionally, the transceiver module may alternatively include a sending module and a receiving module. The sending module is configured to implement a sending function of the apparatus in the fourth aspect, and the receiving module is configured to implement a receiving function of the apparatus in the fourth aspect.

Optionally, the apparatus in the fourth aspect may further include a storage module, and the storage module stores a program or instructions. When the processing module executes the program or the instructions, the apparatus is enabled to perform the method in the second aspect.

It should be noted that the apparatus in the fourth aspect may be a terminal, may be a chip (system) or another part or component that may be disposed in the terminal, or may be an apparatus including the terminal. This is not limited in the application.

In addition, for technical effects of the apparatus in the fourth aspect, refer to the technical effects of the method in the first aspect. Details are not described herein again.

According to a fifth aspect, a communication apparatus is provided. The apparatus includes a processor. The processor is configured to perform the method in the first aspect or the second aspect.

In a possible implementation, the apparatus in the fifth aspect may further include a transceiver. The transceiver may be a transceiver circuit or an interface circuit. The transceiver may be used by the apparatus to communicate with another apparatus.

In a possible implementation, the apparatus in the fifth aspect may further include a memory. The memory and the processor may be integrated together, or may be disposed separately. The memory may be configured to store a computer program and/or data related to the method in the first aspect or the second aspect.

In the application, the apparatus in the fifth aspect may be the network device in the first aspect, for example, the first access network device, or may be the terminal in the second aspect; may be a chip (system) or another part or component that may be disposed in the network device or the terminal; or may be an apparatus including the network device or the terminal.

In addition, for technical effects of the apparatus in the fifth aspect, refer to the technical effects of the method in the first aspect or the second aspect. Details are not described herein again.

According to a sixth aspect, a communication apparatus is provided. The apparatus includes a processor and a memory. The memory is configured to store computer instructions; and when the processor executes the instructions, the apparatus is enabled to perform the method in the first aspect or the second aspect.

In a possible implementation, the apparatus in the sixth aspect may further include a transceiver. The transceiver may be a transceiver circuit or an interface circuit. The transceiver may be used by the apparatus to communicate with another apparatus.

In the application, the apparatus in the sixth aspect may be the network device in the first aspect, for example, the first access network device, or may be the terminal in the second aspect; may be a chip (system) or another part or component that may be disposed in the network device or the terminal; or may be an apparatus including the network device or the terminal.

In addition, for technical effects of the apparatus in the sixth aspect, refer to the technical effects of the method in the first aspect or the second aspect. Details are not described herein again.

According to a seventh aspect, a communication apparatus is provided. The apparatus includes a logic circuit and an input/output interface. The input/output interface is configured to receive code instructions and transmit the code instructions to the logic circuit. The logic circuit is configured to run the code instructions to perform the method in the first aspect or the second aspect.

In a possible implementation, the apparatus in the seventh aspect may further include a transceiver. The transceiver may be a transceiver circuit or an interface circuit. The transceiver may be used by the apparatus to communicate with another apparatus.

In a possible implementation, the apparatus in the seventh aspect may further include a memory. The memory and the processor may be integrated together, or may be disposed separately. The memory may be configured to store a computer program and/or data related to the method in the first aspect or the second aspect.

In the application, the apparatus in the seventh aspect may be the network device in the first aspect, for example, the first access network device, or may be the terminal in the second aspect; may be a chip (system) or another part or component that may be disposed in the network device or the terminal; or may be an apparatus including the network device or the terminal.

In addition, for technical effects of the apparatus in the seventh aspect, refer to the technical effects of the method in the first aspect or the second aspect. Details are not described herein again.

According to an eighth aspect, a communication apparatus is provided. The apparatus includes a processor and a transceiver. The transceiver is configured to exchange information between the communication apparatus and another apparatus, and the processor executes program instructions to perform the method in the first aspect or the second aspect.

In a possible implementation, the apparatus in the eighth aspect may further include a memory. The memory and the processor may be integrated together, or may be disposed separately. The memory may be configured to store a computer program and/or data related to the method in the first aspect or the second aspect.

In the application, the apparatus in the eighth aspect may be the network device in the first aspect, for example, the first access network device, or may be the terminal in the second aspect; may be a chip (system) or another part or component that may be disposed in the network device or the terminal; or may be an apparatus including the network device or the terminal.

In addition, for technical effects of the apparatus in the eighth aspect, refer to the technical effects of the method in the first aspect or the second aspect. Details are not described herein again.

According to a ninth aspect, a communication system is provided. The communication system includes the network device in the first aspect, for example, the first access network device, and the terminal in the second aspect.

According to a tenth aspect, a computer-readable storage medium is provided, including a computer program. When the computer program is run on a computer, the method in the first aspect or the second aspect is performed.

According to an eleventh aspect, a computer program product is provided, including a computer program. When the computer program or instructions are run on a computer, the method in the first aspect or the second aspect is performed.

### BRIEF DESCRIPTION OF DRAWINGS

FIG. 1 is a schematic diagram of a frame structure in a time division duplex system;
FIG. 2 is a schematic diagram of an architecture of an integrated access and backhaul system;
FIG. 3 is a schematic diagram of an architecture of a long term evolution system;
FIG. 4 is a schematic diagram of an architecture of a communication system according to an embodiment of the application;
FIG. 5 is a schematic diagram of interaction in a communication method according to an embodiment of the application;
FIG. 6 is a schematic diagram of a frame structure in a time division duplex system in a communication method according to an embodiment of the application;
FIG. 7 is a schematic diagram of a frame structure in a full-duplex system in a communication method according to an embodiment of the application;
FIG. 8 is a first schematic diagram of a frame structure in a frequency division duplex system in a communication method according to an embodiment of the application;
FIG. 9 is a second schematic diagram of a frame structure in a frequency division duplex system in a communication method according to an embodiment of the application;
FIG. 10 is a first schematic diagram of a structure of a communication apparatus according to an embodiment of the application; and
FIG. 11 is a second schematic diagram of a structure of a communication apparatus according to an embodiment of the application.

### DESCRIPTION OF EMBODIMENTS

The following describes technical terms in embodiments of the application.

### 1. Time unit

The time unit may be referred to as a time domain resource, is a basic granularity of a frame structure in an NR system, and may be a slot (slot), a symbol (symbol), a mini-slot (mini-slot), a subframe (subframe), a radio frame (radio frame), or the like. To meet requirements of various services, the NR system defines three states of the time unit: a downlink state, an uplink state, and a flexible state. The downlink state means that the time unit may be for downlink transmission. The uplink state means that the time unit may be for uplink transmission. The flexible state means that the time unit may be for both the uplink transmission and the downlink transmission, or may be used as a time domain resource of a guard period (guard period, GP) or a reserved time domain resource.

### 2. Status of a time unit in a time division duplex (time division duplex, TDD) system

To better meet service requirements of terminals in the TDD system, a network-side device (for example, an access network device, also referred to as a base station) may flexibly configure the terminals, for example, configure statuses of time units respectively corresponding to the terminals. For example, the time unit is a slot. For a specific terminal, the access network device may use signaling at different levels, for example, signaling at four levels, including a system information block (system information block, SIB), a radio resource control (radio resource control, RRC) message, and a downlink control information (downlink control information, DCI) message, to perform multi-layer nested configuration on a status of a slot corresponding to the terminal, and further to perform multi-layer nested configuration on a status of a symbol in the slot, where DCI includes group (group)-level DCI (for example, referred to as group-DCI or G-DCI) and user equipment (user equipment, UE)-level DCI (for example, referred to as UE-DCI). The following provides descriptions separately.

### Layer one: SIB

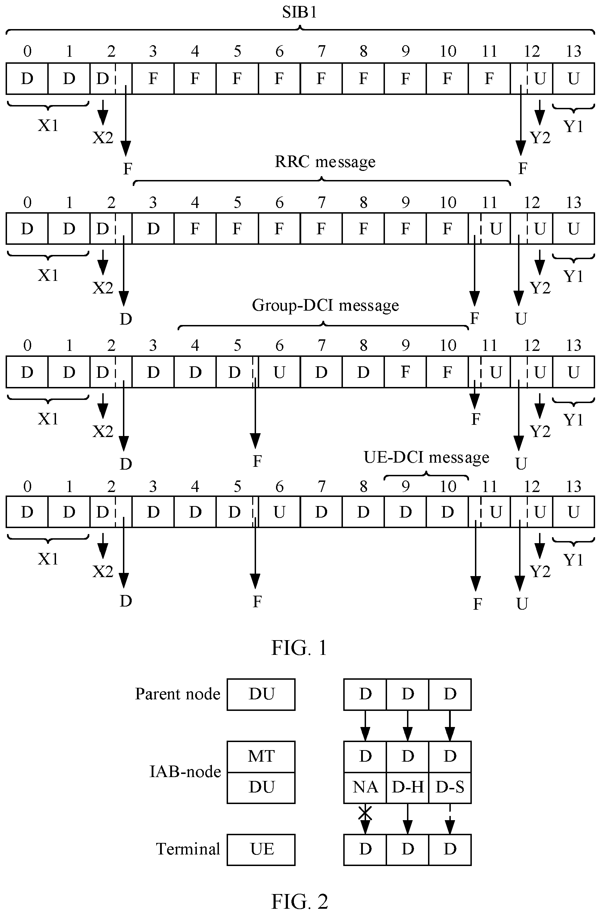

The SIB may be a cell (cell)-level message. To be specific, for all devices in a cell, for example, all terminals accessing the cell, the SIB may indicate a status of each slot/symbol in one uplink-downlink transmission periodicity. Specifically, a first information element, for example, an nrofDownlinkSlots information element (denoted as X1), in the SIB may indicate a quantity of consecutive downlink-only slots that exist after the uplink-downlink transmission periodicity starts. The downlink-only slot means that each symbol in the slot is in a downlink state, and the slot is also considered as a slot in the downlink state. For example, as shown in FIG. 1, X1 indicates that two consecutive slots (a slot 0 and a slot 1) are downlink-only slots (denoted as D) after an uplink-downlink transmission periodicity starts. A second information element, for example, an nrofUplinkSlots information element (denoted as Y1), in the SIB may indicate a quantity of consecutive uplink-only slots that exist before the uplink-downlink transmission periodicity ends. The uplink-only slot means that each symbol in the slot is in an uplink state, and the slot is also considered as a slot in the uplink state. For example, as shown in FIG. 1, Y1 indicates that one slot (a slot 13) is an uplink-only slot (denoted as U) before the uplink-downlink transmission periodicity ends. A third information element, for example, an nrofDownlinkSymbols information element (denoted as X2), in the SIB may indicate a quantity of symbols in the downlink state in the first non-downlink-only slot that exists after the uplink-downlink transmission periodicity starts, also referred to as a quantity of consecutive downlink symbols, for example, a quantity of consecutive symbols in the downlink state starting from a start symbol of the non-downlink-only slot. For example, as shown in FIG. 1, X2 indicates that after the uplink-downlink transmission periodicity starts, there is one slot (a slot 2) that is after the two consecutive downlink-only slots and in which first eight symbols are symbols in the downlink state (denoted as D). A fourth information element, for example, nrofUplinkSymbols (denoted as Y2), in the SIB may indicate a quantity of symbols in the uplink state in the first non-uplink-only slot that exists before the uplink-downlink transmission periodicity ends, also referred to as a quantity of consecutive uplink symbols, for example, a quantity of consecutive symbols in the uplink state ending with an end symbol of the non-uplink-only slot. For example, as shown in FIG. 1, Y2 indicates that before the uplink-downlink transmission periodicity ends, there is one slot (a slot 12) that is before the two consecutive uplink-only slots and in which last six symbols are symbols in the uplink state (denoted as U). It should be noted that the non-downlink-only slot and the non-uplink-only slot may be a same slot, or may be different slots. This is not limited. In addition, a slot/symbol not indicated by X1, X2, Y1, and Y2 is in a flexible state by default.

Optionally, the SIB may further indicate a length of the uplink-downlink transmission periodicity and a reference subcarrier (subcarrier) spacing, so that the terminal can determine a length of the slot or the symbol and a quantity of slots in the uplink-downlink transmission periodicity based on the SIB.

### Layer two: RRC message

The RRC message is device-level signaling. To be specific, for a specific device, for example, a specific terminal in a cell, the RRC message may indicate a status of a slot/symbol not indicated in the SIB, in other words, further indicate a status of a slot/symbol that is in the flexible state by default in the SIB. Specifically, the RRC message may indicate a sequence (sequence) of a slot index (slot index), and indicate a status of a slot corresponding to the slot index. For example, all symbols in the slot are configured as downlink symbols, in other words, each symbol is in the downlink state; or all symbols in the slot are configured as uplink symbols, in other words, each symbol is in the uplink state. Alternatively, the RRC message may indicate a quantity of symbols in the downlink state in the slot, for example, a quantity of consecutive symbols in the downlink state starting from a start symbol of the slot, and a quantity of symbols in the downlink state in the slot, for example, a quantity of consecutive symbols in the uplink state ending with an end symbol of the slot. For example, as shown in FIG. 1, the RRC message indicates that a slot 3 is a downlink-only slot (denoted as D), and that last eight symbols in a slot 11 are uplink symbols (denoted as U). In addition, a slot/symbol not indicated by the RRC message is still in the flexible state by default.

### Layer three: Group-DCI message

A format (format) of the group-DCI message may be a DCI format 2_0. The group-DCI message may be device group-level signaling. To be specific, for all devices in a group, for example, all terminals in connected (connected) mode in a cell or terminals configured with a same group-related identifier, the group-DCI message may indicate a status of a slot/symbol not indicated in the SIB or the RRC message, in other words, further indicate a status of a slot/symbol that is determined by using the SIB and the RRC message as a slot/symbol in the flexible state.

Specifically, an access network device may configure, for a terminal, a slot format combination (slotFormatComb) set, a slot format information (slot format information, SFI)-radio network temporary identifier (radio network temporary identifier, RNTI), and a DCI payload (payload) that correspond to the terminal. The slot format combination set includes a format combination index of one or more consecutive slots, and each format combination index corresponds to one format combination of the one or more consecutive slots. The one or more consecutive slots may be one or more consecutive slots starting from the first slot in slots that are in the flexible state by default in the SIB and the RRC message. A format of each slot refers to respective statuses of all symbols in the slot. To be specific, the format of the slot includes the uplink state, the downlink state, or the flexible state of each symbol in the slot. In other words, the format of each slot may indicate a status of the slot, and a format combination indication of the one or more consecutive slots may indicate a status of the one or more slots. The SFI-RNTI is used by the access network device to scramble the group-DCI message. The DCI payload indicates a location of a format combination index in the group-DCI message. For the terminal, the terminal may perform blind detection on a received DCI message based on the SFI-RNTI. If the terminal can successfully perform descrambling, it indicates that the terminal receives the group-DCI message. In this way, the terminal may determine one format combination index from the group-DCI message based on the DCI payload. The terminal may determine, from the slot format combination set, one slot format combination corresponding to the format combination index. Finally, the terminal may traverse, based on the slot format combination, a slot format table predefined in a protocol, to determine the format of each of the one or more slots, namely, the status of each slot.

For ease of understanding, the following uses an example for description.

For example, the access network device sends, to the terminal, an RRC message that carries a slot format combination set, an SFI-RNTI, and a DCI payload. The slot format combination set, the SFI-RNTI, and the DCI payload may be carried in an information element, for example, a slotFormatIndicator information element, of the RRC message. The slot format combination set indicates a format combination index 2 {0, 2, 8, 4, 0, 1, 1} indicating that indexes of seven consecutive slots in a slot format table are sequentially {0, 2, 8, 4, 0, 1, 1}. The slot format combination set further indicates a format combination index 4 {0, 4, 1, 0, 0} indicating that indexes of five consecutive slots, for example, a slot 4 to a slot 8 in FIG. 1, in the slot format table are sequentially {0, 4, 1, 0, 0}. The SFI-RNTI is a segment of sequential values, for example, 0xF000. The DCI payload is 4, and indicates that a format combination index in a group-DCI message is last four bits (bit). On this basis, the access network device may scramble, by using the SFI-RNTI, a group-DCI message whose signaling content is 00000100, and send the scrambled group-DCI message to the terminal. Correspondingly, the terminal descrambles the scrambled group-DCI message by using the SFI-RNTI, to obtain that the signaling content of the group-DCI message is 00000100. The terminal determines last four bits, namely, 0100, from the group-DCI message based on the DCI payload, namely, 4. 0100 is converted into a decimal value, namely, 4, and indicates the format combination index 4 indicated by the group-DCI message. The terminal traverses, based on the format combination index 4 {0, 4, 1, 0, 0}, the slot format table predefined in the protocol, to determine respective formats of the slot 4 to the slot 8. An example of the slot format table may be Table 1. In Table 1, D indicates that a corresponding symbol is a symbol in the downlink state, U indicates that a corresponding symbol is a symbol in the uplink state, and F indicates that a corresponding symbol is a symbol in the flexible state. The terminal may traverse the first row in Table 1 based on the first format index, namely, 0, in the combination index 4 {0, 4, 1, 0, 0}, to determine the format of the slot 4. To be specific, all symbols in the slot 4 are in the downlink state. The terminal may traverse the fourth row in Table 1 based on the second format index, namely, 4, in the combination index 4 {0, 4, 1, 0, 0}, to determine the format of the slot 5. To be specific, the first 12 symbols in the slot 5 are in the downlink state, and last two symbols in the slot 5 are in the flexible state. The rest can be deduced by analogy until the terminal determines the format of the slot 8.

**Table 1**

| Format | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| ... | | | | | | | | | | | | | | |

### Layer four: UE-DCI message

The UE-DCI message is device-level signaling, and gives an indication for a specific device, for example, a specific terminal in a cell. The UE-DCI message may indicate a status of a slot/symbol not indicated in the SIB, the RRC message, or the group-DCI message, in other words, further indicate a status of a slot/symbol that is determined by using the SIB, the RRC message, and the group-DCI message as a slot/symbol in the flexible state. For example, as shown in FIG. 1, the UE-DCI message indicates a status of a slot 9 or a slot 10.

It can be learned that, although the NR system already supports a flexible frame structure, for slots or symbols indicated as slots or symbols in the flexible state, the terminal still needs to perform receiving detection in these slots or on these symbols, and determine types of these slots or symbols, or receive downlink data. Consequently, energy consumption of the terminal increases, and a battery life is affected.

### 3. Integrated access and backhaul (integrated access and backhaul, IAB)

Compared with a long term evolution (long term evolution, LTE) system, the NR system has a higher frequency, a smaller signal coverage area of an access network device, and denser deployment. As a result, deployment costs, for example, costs of a wired backhaul link between access network devices, are high. Therefore, to reduce the deployment costs, a wireless backhaul technology is introduced to the NR system, to be specific, a backhaul link and an access link use a same wireless transmission technology. This is also referred to as the IAB or an IAB system.

The IAB system may include two types of network element nodes (node): an IAB-donor (dornor) and an IAB-node. The IAB-node may support NR access and wireless backhaul functions, namely, an IAB function. The IAB-node may include two device roles, for example, an IAB-node-mobile-termination (mobile-termination, MT) and an IAB-node-distributed unit (distributed unit, DU). The IAB-node-MT means that the IAB-node acts as a terminal and is connected to a parent node DU of the IAB-node or an IAB-donor-DU, to establish a wireless transmission backhaul link. The IAB-node-DU means that the IAB-node acts as an access network device, and provides an access function for a terminal or a lower-level IAB-node-MT. The IAB-donor may be a gNodeB (also referred to as a gNodeB-donor) that supports an additional function of the IAB, and is connected to a core network (core network, CN) through non-IAB, for example, an optical fiber. The IAB-donor may also include two device roles, for example, an IAB-donor-central unit (central unit, CU) and the IAB-donor-DU. The IAB-donor-CU may provide a connection for the IAB-donor-DU or the IAB-node-DU, and the IAB-donor-DU may provide a connection for the terminal or the IAB-node-MT.

It can be learned that the IAB-node not only needs to provide the access function for the terminal, but also needs to establish the wireless transmission backhaul link to the parent node DU of the IAB-node or the IAB-donor-DU to provide the wireless backhaul function. In this case, to avoid a resource conflict between the access function and the wireless backhaul function, the IAB system may perform special configuration on a status of a resource of the IAB-node-DU. For example, for each slot, a status of each slot may be configured at a granularity of a direction, and further includes any one of the following: a hard (hard) state, a soft (Soft) state, and an unavailable (unavailable, NA) state. The hard state of each slot means that the slot is always available to the IAB-node-DU. The soft state of each slot means that the slot is potentially available to the IAB-node-DU, to be specific, whether the slot is available needs to meet a specific condition. For example, if the IAB-node-MT does not perform a sending or receiving operation in the slot, the IAB-node-DU considers that the slot is available, to avoid the resource conflict. The unavailable state of each slot means that the slot is always unavailable to the IAB-node-DU, to be specific, the IAB-node-DU neither sends a signal nor receives a signal on the resource. Therefore, in combination with the uplink state, the downlink state, and the flexible state above, the resource of the IAB-node-DU has seven states in total, including a hard-uplink state, a soft-uplink state, a hard-downlink state, a soft-downlink state, a hard-flexible state, a soft-flexible state, and the unavailable state.

For ease of understanding, the following uses an example for description.

For example, as shown in FIG. 2, it is assumed that there are three slots, including a slot 0, a slot 1, and a slot 2. For a parent node DU (where the parent node DU may alternatively be an IAB-donor or another IAB-node-DU), three slots of the parent node DU are all configured to be in a downlink state (denoted as D). The parent node DU may send RRC signaling to an IAB-node-MT to indicate that three slots of the IAB-node-MT are all configured to be in the downlink state (denoted as D). For an IAB-node-DU, the IAB-node-DU may receive configuration information from an IAB-donor-CU, to indicate that three slots of the IAB-node-DU are respectively configured to be in an unavailable state, a hard-downlink state, and a soft-downlink state, to avoid a resource conflict between the IAB-node-MT and the IAB-node-DU in the three slots. For a terminal that accesses the IAB-node-DU, the IAB-node-DU may send an RRC message to the terminal, to indicate that three slots of the terminal are all configured to be in the downlink state (denoted as D).

It can be learned that, although the IAB defines the unavailable state of the slot, the unavailable state is applicable only to the IAB-node-DU. The terminal still needs to perform receiving detection in a slot in the unavailable state or the soft-downlink state. Consequently, energy consumption of the terminal increases, and a battery life is affected.

### 4. Almost blank subframe (almost blank subframe, ABS)

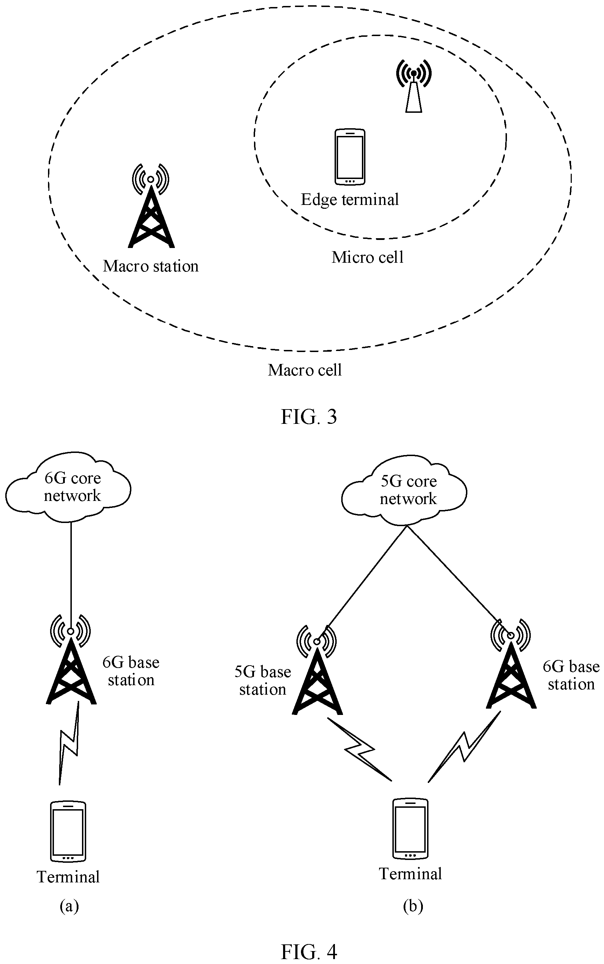

In the LTE system, to reduce macro-micro interference in a heterogeneous network (heterogeneous network, HetNet) scenario, the ABS is introduced to the LTE system. For example, as shown in FIG. 3, a part of time units, for example, subframes, of a macro (macro) cell may be configured as ABSs through, for example, an operation, administration and maintenance (operation, administration and maintenance, OAM) device. In the subframe, a micro/small (micro/small) cell is interfered only by a pilot of the macro cell and a part of common channels, and is not interfered by a service or a control channel. Therefore, for the micro/small cell, this part of subframes are also referred to as protected subframes. In this case, compared with interference in a normal subframe, interference from the macro cell to the micro/small cell is significantly reduced, so that the micro/small cell can schedule, in this part of subframes, an edge terminal that is strongly interfered by the macro cell, to avoid interference to a service of the edge terminal, and improve service reliability. However, the ABS is applicable only to the macro cell and the micro/small cell, and the terminal still needs to perform receiving detection in the ABS. Consequently, energy consumption of the terminal increases, and a battery life is affected.

In conclusion, for the foregoing technical problems, embodiments of the application provide the following technical solutions, to reduce the energy consumption of the terminal and increase the battery life. The following describes the technical solutions in embodiments of the application.

The technical solutions in embodiments of the application may be applied to various communication systems such as a wireless fidelity (wireless fidelity, Wi-Fi) system, a vehicle-to-everything (vehicle to everything, V2X) communication system, a device-to-device (device-todevie, D2D) communication system, an Internet-of vehicles communication system, a 4th generation (4th generation, 4G) mobile communication system, for example, an LTE system, a 5th generation (5th generation, 5G) mobile communication system, for example, an NR system, and a future communication system, for example, a 6th generation (6th generation, 6G) mobile communication system. Certainly, the future communication system may alternatively be named in another manner, and the another naming manner still falls within the scope of the application. This is not limited in the application.

All aspects, embodiments, or features are presented in the application by describing a system that may include a plurality of devices, components, modules, or the like. It should be appreciated and understood that, each system may include another device, component, module, or the like, and/or may not include all devices, components, modules, or the like discussed with reference to the accompanying drawings. In addition, a combination of these solutions may be further used.

In addition, in embodiments of the application, words such as "example" or "for example" are used to indicate an example, an illustration, or a description. Any embodiment or implementation described as an "example" in the application should not be construed as being more preferred or having more advantages than other embodiments or implementations. Exactly, the term "example" is used to present a concept in a specific manner. "/" in the application may represent an "or" relationship.

Network architectures and service scenarios described in embodiments of the application are intended to describe the technical solutions in embodiments of the application more clearly, and do not constitute a limitation on the technical solutions provided in embodiments of the application. A person of ordinary skill in the art may know that with evolution of the network architectures and emergence of new service scenarios, the technical solutions provided in embodiments of the application are also applicable to similar technical problems.

For ease of understanding of embodiments of the application, a communication system shown in FIG. 4 is first used as an example to describe in detail a communication system usable in embodiments of the application. For example, FIG. 4 is a schematic diagram of an architecture of a communication system usable in a communication method according to an embodiment of the application.

As shown in FIG. 4, the communication system includes a terminal and a network device.

The terminal is a terminal device that accesses the foregoing network and that has a wireless transceiver function, or is a chip or a chip system that may be disposed in the terminal. The terminal may also be referred to as user equipment, an access terminal, a subscriber unit (subscriber unit), a subscriber station, a mobile station (mobile station, MS), a mobile station, a remote station, a remote terminal, a mobile device, a user terminal, a wireless communication device, a user agent, or a user apparatus. The terminal in embodiments of the application may be a mobile phone (mobile phone), a cellular phone (cellular phone), a smartphone (smart phone), a tablet computer (Pad), a wireless data card, a personal digital assistant (personal digital assistant, PDA), a wireless modem (modem), a handset (handset), a laptop computer (laptop computer), a machine type communication (machine type communication, MTC) terminal, a computer that has a wireless transceiver function, a virtual reality (virtual reality, VR) terminal, an augmented reality (augmented reality, AR) terminal, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU that has a terminal function, or the like. Alternatively, the terminal in the application may be a vehicle-mounted module, a vehicle-mounted subassembly, a vehicle-mounted component, a vehicle-mounted chip, or a vehicle-mounted unit that is built in a vehicle as one or more components or units.

The network device, for example, an access network device, is a device that is located on a network side of the communication system and that has a wireless transceiver function, or is a chip or a chip system that may be disposed in the device. The network device may include an access network device in a next-generation mobile communication system, for example, a 6G mobile communication system, for example, a 6G base station or a 6G core network element. Alternatively, in the next-generation mobile communication system, the network device may be named in another manner, and the another naming manner falls within the protection scope of embodiments of the application. This is not limited in the application. In addition, the network device may also include a gNB in a 5G system, for example, an NR system, or one antenna panel or a group of antenna panels (including a plurality of antenna panels) of a 5G base station, or may be a network node, for example, a baseband unit (BBU), a CU, a DU, a road side unit (road side unit, RSU) having a base station function, or a wireline access gateway, included in a gNB, a transmission point (transmission and reception point, TRP, or transmission point, TP), or a transmission measurement function (transmission measurement function, TMF). In addition, the network device may further include an access point (access point, AP) in the wireless fidelity (wireless fidelity, Wi-Fi) system, a wireless relay node, a wireless backhaul node, various forms of macro base stations, micro base stations (also referred to as small cells), relay stations, access points, and mobile switching centers, devices that perform a base station function in device-to-device (device-to-device, D2D), vehicle-to-everything (vehicle-to-everything, V2X), and machine-to-machine (machine, M2M) communication, and the like.

In a possible implementation, as shown in (a) in FIG. 4, a terminal and a network device may establish a connection in standalone (standalone, SA) mode. For example, the network device is a 6G base station, may be directly connected to a 6G core network, and is connected to the terminal through a 6G wireless communication link. Alternatively, the network device is a 5G base station, for example, a gNB, may be directly connected to a 5G core network, and is connected to the terminal through a 5G wireless communication link. In another possible implementation, as shown in (b) in FIG. 4, a terminal and network devices may establish connections in dual connectivity (dual connectivity, DC) mode. For example, the network devices include a 6G base station and a 5G base station, and the 6G base station and the 5G base station may be connected to a 5G core network or a 6G core network. The terminal may be connected to the 5G base station through a 5G wireless communication link, and connected to the 6G base station through a 6G wireless communication link, to establish dual connections. In this case, if both the 6G base station and the 5G base station are connected to the 5G core network, the 6G base station may serve as a secondary base station, and the 5G base station may serve as a master base station. Alternatively, if both the 6G base station and the 5G base station are connected to the 6G core network, the 6G base station may serve as a master base station, and the 5G base station may serve as a secondary base station. For another example, the network devices include two 6G base stations, and the two 6G base stations are connected to a 6G core network. The terminal may establish dual connections to the two 6G base stations through 6G wireless communication links. In this case, both the master base station and the secondary base station are 6G base stations.

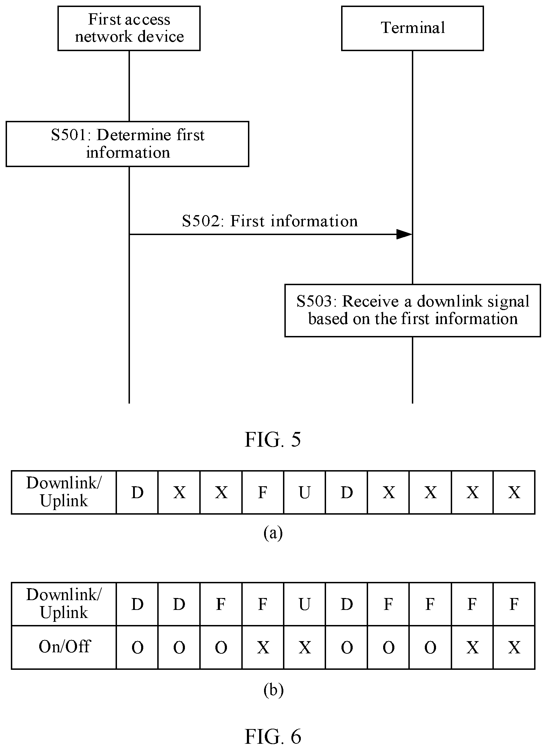

The foregoing describes the communication system usable in the communication method provided in embodiments of the application. The following specifically describes, with reference to FIG. 5 to FIG. 9, the communication method provided in embodiments of the application.

For example, FIG. 5 is a first schematic diagram of interaction in a communication method according to an embodiment of the application. The communication method may be applied to communication between the access network device and the terminal in the communication system shown in FIG. 5. As shown in FIG. 5, the communication method includes the following steps.

S501: A first access network device determines first information.

The first information indicates that a first time unit is in an off state or an on state. The first time unit is one or more time units in an uplink-downlink transmission periodicity, and may be a slot, a symbol, a mini-slot, a subframe, a radio frame, or the like. For ease of understanding, the slot/symbol is used as an example in the embodiment of the application. Time units (including the first time unit, a second time unit, a third time unit, and the like) below are all slots/symbols. For the mini-slot, the subframe, the radio frame, or the like, reference may be made for understanding. Details are not described again. It should be noted that the first information may alternatively indicate that another time unit in the periodicity in which the first time unit is located is in the off state or the on state. For ease of understanding, the first time unit is used as an example for description in the embodiment of the application. For the another time unit in the periodicity in which the first time unit is located, reference may be made for understanding. Details are not described again.

The off state of the first time unit means that the first time unit is not for downlink transmission but can be for uplink transmission. For example, the first access network device does not send a downlink signal in the first time unit, but may receive an uplink signal from a terminal in the first time unit.

The downlink signal may include at least one of the following: a PDCCH, a PDSCH, a synchronization signal, a physical broadcast channel (physical broadcast channel, PBCH), a channel state information reference signal (channel state information reference signal, CSI-RS), a demodulation reference signal (demodulation reference signal, DMRS), a phase-tracking reference signal (phase-tracking reference signal, PTRS), or a tracking reference signal (tracking reference signal, TRS).

The uplink signal may include at least one of the following: a physical uplink control channel (physical uplink control channel, PUCCH), a physical uplink data channel (physical uplink shared channel, PUSCH), a physical random access channel (physical random access channel, PRACH), a DMRS, or a sounding reference signal (sounding reference signal, SRS).

Alternatively, optionally, the off state of the first time unit may mean that the first time unit is neither for downlink transmission nor for uplink transmission. For example, the first access network device neither sends a downlink signal in the first time unit nor receives an uplink signal from a terminal in the first time unit.

It may be understood that the off state of the first time unit is merely an example name for describing whether the first time unit can be for the uplink transmission and the downlink transmission. The off state may alternatively be named in another manner, for example, replaced with a switch-off state, a downlink switch-off state, an uplink/downlink switch-off state, a disconnected state, a downlink disconnected state, an uplink/downlink disconnected state, a deactivated state, a downlink deactivated state, an uplink/downlink deactivated state, a sleep state, a downlink sleep state, or an uplink/downlink sleep state. This is not limited.

Optionally, when the first time unit is in the off state, whether the first time unit can be for the uplink transmission may be predefined in a protocol, or may be indicated by the first access network device to the terminal by using signaling. In an implementation, system information indicates that the first time unit is for the uplink transmission, or is not for the uplink transmission. For example, signaling, for example, one bit, in the system information indicates whether the first time unit can be for the uplink transmission. If a value of the bit is 1, it indicates that the first time unit can be for the uplink transmission; or if a value of the bit is 0, it indicates that the first time unit cannot be for the uplink transmission. Alternatively, if a value of the bit is 0, it indicates that the first time unit can be for the uplink transmission; or if a value of the bit is 1, it indicates that the first time unit cannot be for the uplink transmission.

The on state of the first time unit means that the first time unit can be for both the downlink transmission and the uplink transmission. For example, the first access network device may send a downlink signal in the first time unit, and may receive an uplink signal from the terminal in the first time unit. Alternatively, optionally, the on state of the first time unit may mean that the first time unit can be for the downlink transmission but cannot be for the uplink transmission. For example, the first access network device may send a downlink signal in the first time unit, but does not receive an uplink signal from the terminal in the first time unit. It may be understood that the on state of the first time unit is merely an example name for describing whether the first time unit can be for the uplink transmission and the downlink transmission. The on state may alternatively be named in another manner, for example, replaced with a switch-on state, a downlink switch-on state, an uplink/downlink switch-on state, an enabled state, a downlink enabled state, an uplink/downlink enabled state, an activated state, a downlink activated state, or an uplink/downlink activated state. This is not limited.

It should be noted that the foregoing description that the first time unit is in the off state or the on state is merely an example, constitutes no limitation, and may be replaced with any other possible description, for example, that the first time unit is in an on/off state, or the first time unit is in the off state or the on state.

In a possible implementation, the first access network device may determine, based on a service, whether the first time unit is in the off state or the on state. For example, if a service requirement is that the first time unit can be only for the uplink transmission or is not for the uplink transmission or the downlink transmission, the first access network device determines that the first time unit is in the off state, to determine the first information. Alternatively, if a service requirement is that the first time unit can be only for the downlink transmission or is for the uplink transmission and the downlink transmission, the first access network device determines that the first time unit is in the on state, to determine the first information. Certainly, the first access network device may alternatively dynamically determine whether the first time unit is in the off state or the on state. For another example, if the first access network device determines that the first time unit is not for the downlink transmission or is not for the uplink transmission or the downlink transmission in a period of time (for example, one or more periodicities or any period of time), the first access network device determines that the first time unit is in the off state, to determine the first information. Alternatively, if the first access network device determines that the first time unit needs to be for the downlink transmission or for the uplink transmission and the downlink transmission, the first access network device determines that the first time unit is in the on state, to determine the first information. It should be noted that the first information is carried in different signaling, and a manner in which the first information indicates the first time unit varies with information element content of the first information determined by the first access network device. For a specific implementation, refer to related descriptions in S502.

S502: The first access network device sends the first information to the terminal. Correspondingly, the terminal receives the first information from the first access network device.

The first information may be carried in one or more of the following messages: the system information, a radio resource control message, or a downlink control information message, to implement signaling multiplexing and reduce communication overheads. The system information may be a SIB 1; may be system information of another type, for example, a SIB2; or may be applied to a next-generation mobile communication system, and is named in a manner in the next-generation mobile communication system. This is not limited. The radio resource control message may be an RRC message; or may be applied to a next-generation mobile communication system, and is named in a manner in the next-generation mobile communication system. The downlink control information message may include a group-DCI message and/or a UE-DCI message; or may be applied to a next-generation mobile communication system, and is named in a manner in the next-generation mobile communication system. A format of the downlink control information message may be a DCI format 2_0 or a new format, for example, a DCI format 3_0 or a DCI format 4_0. Alternatively, the new format may be named in another manner. This is not limited. The following describes a specific implementation principle of including the first information in the foregoing signaling.

Case 1: The first information is carried in the system information.

The first information may indicate only the off state of the first time unit. In this case, if the first information does not indicate the first time unit, the first time unit is in the on state by default. Alternatively, the first information may indicate the off state or the on state of the first time unit. The following separately provides descriptions.

Manner 11: The first information may indicate the off state of the first time unit at a slot level or a symbol level. In a possible manner, the first time unit is a slot, and the first information may indicate an off state of the slot at the slot level. For example, the first information may indicate an index of the slot, to indicate that the slot is in the off state, to be specific, that all symbols in the slot are in the off state, so that the off state is indicated at the slot level. The index of the slot may be an index of the slot in a periodicity in which the slot is located (namely, the periodicity in which the first time unit is located). For example, the periodicity includes eight slots, and indexes of the eight slots may be {0, 1, 2, 3, 4, 5, 6, 7}. The first information may use a bitmap (bitmap), for example, eight bits, to implicitly indicate the indexes of the eight slots by using locations of the eight bits in the bitmap. For example, the first bit may indicate a slot (denoted as a slot 0) whose index is 0, and the second bit may indicate a slot (denoted as a slot 1) whose index is 1. The rest can be deduced by analogy, and the eighth bit may indicate a slot (denoted as a slot 7) whose index is 7. On this basis, if a value of a bit is 1, it means that the bit indicates an index of a corresponding slot. If a value of a bit is 0, it means that the bit does not indicate an index of a corresponding slot, in other words, the bit is an invalid bit. For example, if the eight bits are 11000001, it means that the bitmap indicates the slot 0, the slot 1, and the slot 7, to be specific, the slot 0, the slot 1, and the slot 7 are in the off state. Certainly, it may alternatively be considered that if a value of a bit is 0, the bit indicates an index of a corresponding slot; or if a value of a bit is 1, the bit is an invalid bit. For another example, the periodicity includes eight slots, and indexes of the eight slots may be {0, 1, 2, 3, 4, 5, 6, 7}. The first information may correspondingly indicate respective indexes of the eight slots by using a plurality of value combinations of a plurality of bits. For example, eight value combinations of three bits are {000, 001, 010, 011, 100, 101, 110, 111}, where 000 indicates a slot 0, and 001 indicates a slot 1. The rest can be deduced by analogy, and 111 indicates a slot 7. In another possible manner, the first time unit is a slot, and the first information may indicate an off state of the slot at the symbol level. For example, the first information may indicate an index of the slot, and indicate that a symbol corresponding to the index (a symbol in the slot) is in the off state, so that the off state is indicated at the symbol level. For example, the first information may indicate one or more off-state situations of symbols in the slot by using a plurality of value combinations of one or more bits, for example, eight value combinations of three bits, 16 value combinations of four bits, or 32 value combinations of five bits. The one or more off-state situations may mean: One or more consecutive symbols starting from a start symbol of the slot are in the off state; one or more consecutive symbols ending with an end symbol of the slot are in the off state; one or more consecutive symbols starting from a specific symbol in the middle of the slot are in the off state; or any one or more symbols in the slot are in the off state. In consideration of communication overheads, the foregoing one or more bits may be a small quantity of bits (for example, one to six bits), to indicate a common off-state situation, for example, that some consecutive symbols are in the off state. Alternatively, when communication overheads are not considered, the first information may indicate an off-state situation of each symbol in the slot by using a large quantity of bits (for example, 14 bits). It may be understood that, if the symbol indicated by the first information is a part of symbols in the slot, it indicates that the slot is in a partially off state, and a remaining part of symbols in the slot that are not indicated are in the on state by default. If the symbol indicated by the first information is all the symbols in the slot, it indicates that the slot is in a completely off state. Certainly, the foregoing indication manner using the bitmap or the value combination is merely an example for ease of understanding by a reader. A specific indication manner of the first information is not limited in embodiments of the application. In still another possible manner, the first time unit is a symbol, and the first information may indicate an off state of the symbol at the symbol level. For example, the first information may indicate only an index of the symbol, to indicate that the symbol is in the off state, so that the off state is indicated at the symbol level.

It may be understood that the foregoing indication manner using the index is merely an example for ease of understanding by a reader. A specific indication manner of the first information is not limited in embodiments of the application. For example, the first information may alternatively indicate, by using a resource indication value (resource indication value, RIV), that a segment of consecutive time units including the first time unit are in the off state.

That the first information indicates only the off state of the first time unit is merely an example, and constitutes no limitation. For example, the first information may alternatively indicate only the on state of the first time unit, and a time unit not indicated by the first information is in the off state by default.

Manner 12: The first information may indicate the off state or the on state of the first time unit at a slot level or a symbol level. In a possible manner, the first time unit is a slot, and the first information may indicate an index of the slot, and indicate that a symbol corresponding to the index (a symbol in the slot) is in the off state or the on state, so that the off state or the on state is indicated at the symbol level. For example, the first information may indicate that each symbol in the slot is in the off state or the on state. For example, the first information includes 14 bits. If a value of each bit is 1, it indicates that one corresponding symbol in the 14 symbols in the slot is in the off state, or if a value of each bit is 0, it indicates that one symbol corresponding to the bit is in the on state. For example, the first information indicates, by using a bit sequence {11111100000000}, that the first symbol to the sixth symbol in the slot are in the off state, and that the seventh symbol to the fourteenth symbol in the slot are in the on state. For another example, the first information indicates, by using a bit sequence { 10001100000011}, that the first symbol, the fifth symbol, the sixth symbol, the thirteenth symbol, and the fourteenth symbol in the slot are in the off state, and that the second symbol to the fourth symbol and the seventh symbol to the twelfth symbol in the slot are in the on state. Certainly, the foregoing indication manner using the bit sequence is merely an example for ease of understanding by a reader. A specific indication manner of the first information is not limited in embodiments of the application. In another possible manner, the first time unit is a slot, and the first information may indicate an index of the slot. For example, the index of the slot is explicitly indicated by using some bits, or is implicitly indicated by using locations of these bits in a bit sequence (where a remaining bit in the bit sequence may indicate that another slot is in the off state or the on state). The first information may further indicate that the slot is in the off state or the on state. For example, values (two values of one bit) of the foregoing bits (the bits that implicitly indicate the index) indicate that the slot is in the off state or the on state, to be specific, all symbols in the slot are in the off state or the on state, so that the off state or the on state is indicated at the slot level. For example, the first information indicates, by using a bit sequence {000111}, that the first slot to the third slot are in the on state, and that the fourth slot to the sixth slot are in the off state. In still another possible manner, the first time unit is a symbol, and the first information may indicate an index of the symbol. For example, the index of the symbol is explicitly indicated by using some bits, or is implicitly indicated by using locations of these bits in a bit sequence. The index of the symbol may be an index in a slot in which the symbol is located. For example, the slot includes 14 symbols, and indexes of the 14 symbols may be {0, 1, 2, 3, 4, 5, 6, 7, 8, 9, 10, 11, 12, 13}. The first information may further indicate that the symbol is in the off state or the on state. For example, values (two values of one bit) of the foregoing bits (the bits that implicitly indicate the index) indicate that the symbol is in the off state or the on state, so that the off state or the on state is indicated at the symbol level. For example, the first information indicates, by using a bit sequence {0001 1100000000}, that the first symbol to the third symbol are in the on state, the fourth symbol to the sixth symbol are in the off state, and the seventh symbol to the thirteenth symbol are in the on state. It may be understood that, that the value of the bit being 1 indicates the off state and the value of the bit being 0 indicates the on state is used as an example in the embodiment, and constitutes no limitation. For example, alternatively, the value of the bit being 1 may indicate the on state, and the value of the bit being 0 may indicate the off state.

It should be noted that when the first time unit is a slot, and the first information indicates a symbol in the off state in the slot or indicates that each symbol in the slot is in the off state or the on state, if a part of symbols in the slot are in the off state, and a remaining symbol in the slot is not indicated (is in a flexible state by default) or is indicated as a symbol in a flexible state, the off state of the slot may be understood as a partially off state, in other words, the first time unit is in a partially off state. Similarly, if only a part of symbols in the slot are in the on state, and a remaining symbol in the slot is not indicated (is in the flexible state by default) or is indicated as a symbol in the flexible state, the on state of the slot may be understood as a partially on state, in other words, the first time unit is in a partially on state. If a part of symbols in the slot are in the off state, and a remaining part of symbols are in the on state, the slot may be in a hybrid state, in other words, the first time unit is in a hybrid state. If all the symbols in the slot are in the off state, the off state of the slot may be understood as a completely off state. Similarly, if all the symbols in the slot are in the on state, the on state of the slot may be understood as a completely on state. Therefore, unless otherwise specified, the off state mentioned below in the application may be understood as the partially off state, or may be understood as the completely off state. Unless otherwise specified, the on state mentioned below in the application may be understood as the partially on state, or may be understood as the completely on state.

Optionally, the system information may further indicate the periodicity in which the first time unit is located and a reference subcarrier spacing, so that the terminal can determine a quantity of time units in the periodicity and a length of each time unit, to ensure that subsequent communication can be normally performed. A length of the periodicity in which the first time unit is located may be the same as or different from a length of the foregoing uplink-downlink transmission periodicity. When the lengths of the two periodicities are different, the lengths may be in a multiple relationship. For example, the periodicity in which the first time unit is located is a positive integer multiple of the uplink-downlink transmission periodicity, or the uplink-downlink transmission periodicity is a positive integer multiple of the periodicity in which the first time unit is located.

Case 2: The first information is carried in the radio resource control message.

The first information may indicate, by using a bit sequence, only the off state of the first time unit or the off state or the on state of the first time unit. This is similar to the case 1. For a specific implementation principle, refer to the case 1 for understanding. Details are not described again. If the system information already indicates the periodicity in which the first time unit is located and the reference subcarrier spacing, the radio resource control message may generally not indicate the periodicity in which the first time unit is located or the reference subcarrier spacing, to improve communication efficiency. Alternatively, the radio resource control message may still indicate the periodicity in which the first time unit is located and the reference subcarrier spacing. For example, when the periodicity or the reference subcarrier spacing is updated, the radio resource control message may indicate an updated periodicity or an updated reference subcarrier spacing, to ensure data synchronization between the terminal and the first access network device.

Case 3: The first information is carried in the downlink control information message.

Manner 21: The first information may indicate, by using a bit sequence, only the off state of the first time unit or the off state or the on state of the first time unit. This is similar to the case 1. For a specific implementation principle, refer to the case 1 for understanding. Details are not described again.

Manner 22: The first information may further indicate a format index of the first time unit, to indicate the off state or the on state of the first time unit by using the format index. This further reduces the communication overheads. For example, the first time unit is a slot. The first information may indicate an index of the slot and a format index of the slot. The index of the slot is for determining the specific slot. The format index of the slot indicates one format of the slot. A format of each slot refers to respective off states or on states of all symbols in the slot. In other words, the format of the slot, namely, the off state or the on state of the slot, includes the off state or the on state of each symbol in the slot. On this basis, the first access network device may preconfigure a slot format table for the terminal (or the slot format table may be predefined in a protocol), so that the terminal may determine the off state or the on state of the slot based on the slot format table. For a specific implementation, refer to S503. The slot format table may indicate a slot format corresponding to a format index of each slot. An example of the slot format table may be Table 2.

**Table 2**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | X | X | X | X | X | X | X | X | X | X | X | X | X | X |
| 1 | O | O | O | O | O | O | O | O | O | O | O | O | O | O |
| 2 | X | X | X | X | X | X | X | X | X | X | X | X | X | O |
| 3 | X | X | X | X | X | X | X | X | X | X | X | X | O | O |
| 4 | X | X | X | X | X | X | X | X | X | X | X | O | O | O |
| 5 | X | X | X | X | X | X | X | X | X | X | O | O | O | O |
| 6 | X | X | X | X | X | X | X | X | X | O | O | O | O | O |
| 7 | X | O | O | O | O | O | O | O | O | O | O | O | O | O |
| 8 | X | X | O | O | O | O | O | O | O | O | O | O | O | O |
| 9 | X | X | X | O | O | O | O | O | O | O | O | O | O | O |
| 10 | X | X | X | X | O | O | O | O | O | O | O | O | O | O |
| 11 | X | X | X | X | X | O | O | O | O | O | O | O | O | O |
| 12 | X | X | X | X | X | X | O | O | O | O | O | O | O | O |
| 13 | X | X | X | X | X | X | X | O | O | O | O | O | O | O |
| 14 | X | X | X | X | X | X | X | X | O | O | O | O | O | O |
| ... | | | | | | | | | | | | | | |

In Table 2, X indicates that a corresponding symbol is in the off state, and O indicates that a corresponding symbol is in the on state. If the system information already indicates the periodicity in which the first time unit is located and the reference subcarrier spacing, the downlink control information message generally does not indicate the periodicity in which the first time unit is located or the reference subcarrier spacing. However, this is not limited. For example, the downlink control information message may still indicate the periodicity in which the first time unit is located and the reference subcarrier spacing.

It should be further noted that, if the downlink control information message is a device group-level downlink control information message (referred to as a group-downlink control information message for short below), for example, a group-DCI message, the group-downlink control information message is applicable to all devices in a group, for example, all terminals in connected mode in a cell. To be specific, the first access network device may send the downlink control information message once, so that all the terminals in the device group can determine the off state or the on state of the first time unit based on the same downlink control information message, to decrease a quantity of signaling sending times, and further reduce the communication overheads. If the downlink control information message is a device-level downlink control information message (referred to as a device-downlink control information message for short below), for example, a UE-DCI message, the device-downlink control information message is applicable to a corresponding device, for example, a specific terminal. In this case, the first access network device may send a corresponding device-downlink control information message to each terminal, in other words, send the device-downlink control information message for a plurality of times, so that each terminal can determine the off state or the on state of the first time unit based on the corresponding device-downlink control information message, to more flexibly indicate the off state or the on state of the first time unit. In a possible implementation, the group-downlink control information message may indicate an off state or an on state of each of one or more slots (including the first time unit), and the device-downlink control information message indicates an off state or an on state of a current slot, namely, a slot in which the device-downlink control information message is currently located. For example, the device-downlink control information message is located on the first symbol in the current slot, and may indicate an off state or an on state of a symbol (including the first time unit) other than the first symbol.

Optionally, for the downlink control information message, for example, the group-downlink control information message, the first access network device may further scramble the downlink control information message based on a preset identifier and a first preset identifier, to send the scrambled downlink control information message to the terminal, to improve communication security and reliability. The preset identifier may be a specific RNTI, for example, an SFI-RNTI. Alternatively, in a next-generation mobile communication system, the specific RNTI may be named in another manner, for example, may be named an off RNTI, an on RNTI, or an RNTI in the on/off state. Alternatively, another information element may be for the scrambling. These are all fall within the protection scope of the application.

S503: The terminal receives the downlink signal based on the first information.

The terminal may determine, based on the first information, that the first time unit is in the on state or the off state, to receive the downlink signal based on the on state or the off state of the first time unit. Specifically, it can be learned from related descriptions in S502 that, if the first information is carried in the system information, the radio resource control message, or the downlink control information message, and indicates, by using the bit sequence, that the first time unit is in the on state or the off state, the terminal may determine, based on the bit sequence of the first information, that the first time unit is in the on state or the off state. Alternatively, if the first information is carried in the downlink control information message, and indicates the format index of the first time unit, the terminal may determine the first time unit based on the index that is of the first time unit and that is indicated by the first information, and then traverse the slot format table (for example, Table 2) based on the format index that is of the first time unit and that is indicated by the first information, to determine the format of the first time unit, to be specific, whether each symbol in the first time unit is in the off state or the on state, in other words, whether the first time unit is in the off state or the on state.

If the terminal determines that the first time unit is in the off state, the terminal does not receive the downlink signal in the first time unit, in other words, does not perform receiving detection. Alternatively, if the terminal determines that the first time unit is in the on state, the terminal receives the downlink signal in the first time unit, in other words, performs receiving detection. It can be learned from related descriptions in S502 that, if the first time unit is the slot, and the off state of the slot is a partially off state, that the terminal does not receive the downlink signal in the first time unit means: The terminal does not receive the downlink signal on the symbol in the off state in the slot. Similarly, if the first time unit is the slot, and the on state of the slot is the partially on state, that the terminal receives the downlink signal in the first time unit means: The terminal receives the downlink signal on the symbol in the on state in the slot.

In conclusion, it can be learned from the method shown in FIG. 5 that, the first access network device sends the first information to the terminal, to indicate that the first time unit is in the off state or the on state, so that the terminal may receive the downlink signal based on the first information. For example, if the first time unit is in the off state, the terminal may not receive the downlink signal in the first time unit, in other words, may not perform receiving detection, to reduce energy consumption of the terminal and increase a battery life.

Optionally, with reference to the foregoing embodiment, in a first possible application scenario, the method provided in the embodiment of the application may further include: The first access network device sends second information to the terminal. Correspondingly, the terminal receives the second information from the first access network device.

The second information indicates that a second time unit is in the off state or the on state. An indication principle of the second information is similar to that of the first information. For details, refer to related descriptions of the first information in S502. The details are not described again.

In a possible implementation, the second time unit and the first time unit may be different time units, so that the second information may indicate whether a time unit not indicated by the first information is in the off state or the on state. The first time unit and the second time unit may be different time units at a same granularity, for example, different slots or different symbols, to flexibly indicate respective off states or on states of the different time units at the same granularity. Alternatively, the first time unit and the second time unit may be time units at different granularities, for example, a slot and a symbol in the slot, or a slot and a symbol in another slot, to flexibly indicate respective off states or on states of the different time units at the different granularities.

Specifically, in a possible implementation, if the first information indicates only that the first time unit is in the off state, the second time unit is in the on state by default. In this case, the second information may indicate that the second time unit is in the off state, and it may also be considered that the second information indicates only that the second time unit is in the off state. For example, the first time unit is a slot. If the first information indicates only that a part of symbols in the slot are in the off state, the second information may indicate that a symbol other than this part of symbols in the slot is in the off state. For another example, the first time unit and the second time unit are different slots. If the first information indicates only that one of the slots is in the off state, the second information may indicate only that the other slot is in the off state. For still another example, the first time unit and the second time unit are different symbols. If the first information indicates only that one of the symbols is in the off state, the second information may indicate only that the other symbol is in the off state.

Alternatively, in another possible implementation, if the first information indicates that the first time unit is in the off state or the on state, the first information does not indicate whether the second time unit is in the off state or the on state. In this case, the second information may indicate only that the second time unit is in the off state, or may indicate that the second time unit is in the off state or the on state. For example, the first time unit is a slot. If the first information indicates that a part of symbols in the slot are in the off state or the on state, the second information may indicate only that a symbol other than this part of symbols in the slot is in the off state, or indicate that each of remaining symbols is in the off state or the on state. For another example, the first time unit and the second time unit are different slots. If the first information indicates that one of the slots is in the off state or the on state, the second information may indicate only that the other slot is in the off state, or indicate that the other slot is in the off state or the on state. For still another example, the first time unit and the second time unit are different symbols. If the first information indicates that one of the symbols is in the off state or the on state, the second information may indicate only that the other symbol is in the off state, or indicate that the other symbol is in the off state or the on state.

It should be noted that, it can be learned from the foregoing indication manner of the first information that, that the second information indicates that a second time unit is in the off state or the on state may be: The second information indicates an index of the second time unit, and indicates, by using a bit sequence, that the second time unit is in the off state or the on state. In this case, the first access network device may renumber the index of the second time unit, to reduce overheads caused by indicating the index of the second time unit by the second information. For example, eight slots need to be indicated, and indexes of the eight slots may be indicated by using value combinations of three bits. The first access network device indicates off states or on states of five slots by using 15 bits carried in the system information (where an index of each slot is indicated by three bits, and a total of 15 bits are needed for the five slots). Then, the first access network device may renumber indexes of three remaining slots, for example, number the indexes as {0, 1, 2}, to indicate the indexes of the three remaining slots by using value combinations of two bits. In this case, the first access network device indicates off states or on states of the three remaining slots by using six bits carried in the radio resource control message (where an index of each slot is indicated by two bits, and a total of six bits are needed for the three slots), so that overheads of three bits can be reduced.

Alternatively, in another possible implementation, the first time unit and the second time unit may be a same time unit. For example, the first time unit and the second time unit are a same slot or a same symbol. To be specific, for a time unit whose off state or on state is already indicated, the first access network device may continue to indicate a latest off state or on state of the time unit, so that when the off state or the on state of the time unit changes, the terminal can be notified in time, to further reduce the energy consumption of the terminal and further increase the battery life.

Specifically, if the first information indicates that the first time unit is in the off state, the second information indicates that the first time unit is in the on state. For example, the first time unit is a slot. If the first information indicates that a part of symbols or all symbols in the slot are in the off state, the second information may indicate that this part of symbols or all the symbols in the slot are in the on state. For another example, the first time unit is a symbol. If the first information indicates that the symbol is in the off state, the second information may indicate that the symbol is in the on state. Similarly, if the first information indicates that the first time unit is in the on state, the second information indicates that the first time unit is in the off state. For example, the first time unit is a slot. If the first information indicates that a part of symbols or all symbols in the slot are in the on state, the second information may indicate that this part of symbols or all the symbols in the slot are in the off state. For another example, the first time unit is a symbol. If the first information indicates that the symbol is in the on state, the second information may indicate that the symbol is in the off state.

The first information and the second information may be carried in a same message, to reduce the communication overheads.

Alternatively, the first information and the second information may be carried in different messages, to more flexibly indicate the off state or the on state of each time unit. That the first information and the second information may be carried in different messages may mean: The first information and the second information may be carried in signaling at different levels. For example, the first information is carried in the system information (first-layer signaling), and the second information is carried in the radio resource control message (second-layer signaling) or the downlink control information message (third-layer or fourth-layer signaling). Alternatively, the first information is carried in the radio resource control message, and the second information is carried in the downlink control information message. Alternatively, the first information is carried in the group-downlink control information message, and the second information is carried in the device-downlink control information message. In other words, the off state or the on state of each time unit, for example, the first time unit and the second time unit, may be indicated in a multi-layer nested manner by using a maximum of four layers of signaling (the system information, the downlink control information message, the group-downlink control information message, and the device-downlink control information message), so that the first access network device does not repeatedly send signaling at a same layer, to improve the communication efficiency. It should be noted that, in the foregoing descriptions, a principle of the nested indication using four layers of signaling is described by using an example in which the first information and the second information are separately carried in two layers of signaling. In an actual application scenario, the first access network device may sequentially indicate, in a nested manner by using the foregoing four layers of signaling or any three layers of the four layers of signaling, whether each time unit is in the off state or the on state.

Optionally, with reference to the foregoing embodiment, in a second possible application scenario, the method provided in the embodiment of the application may further include: The first access network device sends third information to the terminal. Correspondingly, the terminal receives the third information from the first access network device.

The third information indicates that a third time unit may be in one or more of the following states: the off state, a downlink state, an uplink state, a receive state, a transmit state, or the flexible state, in other words, may further indicates the uplink/downlink/transmit/receive state of the third time unit, so that when the third time unit is in the on state, the terminal may receive and send data in the third time unit.

The first time unit and the third time unit may be a same time unit. For example, the first time unit and the third time unit are a same slot or symbol. Alternatively, the second time unit and the third time unit may be a same time unit. For example, the second time unit and the third time unit are a same slot or symbol. To be specific, the first access network device may indicate a latest state of a specific time unit, so that when a status of the time unit changes, for example, changes from the off state to the uplink/downlink/transmit/receive state, the terminal can be notified in time. In this way, the terminal may receive and send data in time, to improve the communication reliability and reduce a communication delay. Alternatively, the first time unit and the third time unit may be different time units, or the second time unit and the third time unit may be different time units. Unless otherwise specified, that the first time unit and the third time unit are different time units generally means: The first time unit and the third time unit are different time units at a same granularity. For example, the first time unit and the third time unit are different slots, or are different symbols. Similarly, unless otherwise specified, that the second time unit and the third time unit are different time units generally means: The second time unit and the third time unit are different time units at a same granularity. For example, the second time unit and the third time unit are different slots, or are different symbols.

If the third time unit is in one or more of the following states: the off state, the downlink state, the uplink state, or the flexible state, the third time unit may be applied to a TDD system. If the third time unit is in one or more of the following states: the off state, the receive state, the transmit state, or the flexible state, the third time unit may be applied to a frequency division duplex (frequency division duplex, FDD) system and a full-duplex system. For example, if the receive state and the transmit state of the third time unit are associated with different carriers (carrier), the third time unit is applicable to the FDD system. In this case, the receive state and the downlink state of the third time unit may be replaced with each other, and the transmit state and the uplink state of the third time unit may be replaced with each other. For another example, if the receive state and the transmit state of the third time unit are associated with a same carrier, the third time unit is applicable to the full-duplex system, in other words, the same carrier associated with the third time unit may be for both sending and receiving operations.

It should be noted that, unless otherwise specified, the downlink state in embodiments of the application may be understood as a downlink-only state, or may be understood as a partially downlink state. The uplink state in embodiments of the application may be understood as an uplink-only state, or may be understood as a partially uplink state. The flexible state in embodiments of the application may be understood as a flexible-only state, or may be understood as a partially flexible state. In addition, the uplink state in embodiments of the application may also be understood as a soft-uplink state or a hard-uplink state. The downlink state in embodiments of the application may also be understood as a soft-downlink state or a hard-downlink state. The flexible state in embodiments of the application may also be understood as a soft-flexible state or a hard-flexible state. The transmit state in embodiments of the application may be understood as a partial transmit state, or may be understood as a transmit-only state. The receive state in embodiments of the application may be understood as a partial transmit state, or may be understood as a receive-only state. The downlink state, the uplink state, the receive state, the transmit state, or the flexible state in embodiments of the application is understood from a perspective of the terminal. This is not limited. Alternatively, the downlink state, the uplink state, the receive state, the transmit state, or the flexible state may be understood from a perspective of the access network device. For ease of understanding, descriptions are provided below in embodiments of the application by using an example in which the third time unit is applicable to the TDD system or the full-duplex system.

The third information and the first information may be carried in a same message, or the third information and the second information may be carried in a same message, to jointly indicate the off state, the on state, and the uplink/downlink/transmit/receive state of each time unit, to reduce the communication overheads. Alternatively, the third information and the first information may be carried in different messages, or the third information and the second information may be carried in different messages, to separately indicate the off state, the on state, and the uplink/downlink/transmit/receive state of each time unit, to improve indication flexibility. The following specifically describes the joint indication and the separate indication based on different systems to which the third time unit is applicable.

### Case A: TDD system

Refer to FIG. 6. In FIG. 6, "D" represents the downlink state, "F" represents the flexible state, "U" represents the uplink state, "O" represents the on state, and "X" represents the off state. Specifically, (a) in FIG. 6 shows a frame structure of joint indication in the TDD system. In the TDD system, when a time unit is in the on state, uplink and downlink transmission may be performed in the time unit. In other words, the time unit is also in the downlink state, the uplink state, or the flexible state. In other words, that the time unit is in the on state may be replaced with (in other words, equivalent to): The time unit is in the downlink state, the uplink state, or the flexible state. Therefore, in the joint indication, the on state of the time unit may not be indicated, but four states, namely, the off state, the downlink state, the uplink state, or the flexible state, of the time unit are classified as one type of state, to indicate, by using one piece of information (for example, the first information, the second information, or the third information) that the time unit is in one of the four states. In other words, if the first information indicates that the first time unit is in the off state, or the second information indicates that the second time unit is in the off state, the third information cannot indicate that the first time unit or the second time unit is further in one or more of the following states: the downlink state, the uplink state, or the flexible state, but needs to indicate that another time unit, for example, the third time unit, is in one or more of the following states: the off state, the downlink state, the uplink state, or the flexible state. Therefore, in the joint indication, the first time unit and the third time unit may be different time units, or the second time unit and the third time unit may be different time units. It can be learned from related descriptions in the foregoing first possible application scenario that the first access network device may indicate, in the nested manner by using the foregoing four layers of signaling, namely, the system information, the downlink control information message, the group-downlink control information message, and the device-downlink control information message, that each time unit is in the off state. The following provides descriptions by using the first information and the second information as examples.

### Layer one: System information

For example, the system information carries the first information. The first information may indicate that the first time unit is in the off state, the downlink state, the uplink state, or the flexible state at a slot level or a symbol level. Details are described below.

Manner 31: For example, the first time unit is a slot, and the first information may indicate an off state, a downlink state, an uplink state, or a flexible state of the slot at the symbol level. For example, the first information may indicate an index of the slot. The index of the slot may be an index of the slot in a periodicity in which the slot is located (namely, the periodicity in which the first time unit is located). For example, the periodicity includes eight slots, and indexes of the eight slots may be {0, 1, 2, 3, 4, 5, 6, 7}. The first information may use a bitmap, for example, eight bits, to implicitly indicate the indexes of the eight slots by using locations of the eight bits in the bitmap. Alternatively, the first information may correspondingly indicate the indexes of the eight slots by using a plurality of value combinations of a plurality of bits. For a specific implementation, refer to related descriptions in the foregoing " manner 11". Details are not described again. On this basis, the first information may indicate that a symbol corresponding to the index (a symbol in the slot) is in the off state, the downlink state, the uplink state, or the flexible state, in other words, indicate the off state, the downlink state, the uplink state, or the flexible state of the slot at the symbol level. For example, the first information may indicate, by using a plurality of value combinations of one or more bits, for example, eight value combinations of three bits, 16 value combinations of four bits, or 32 value combinations of five bits, that the corresponding symbol in the slot is in the off state, the downlink state, the uplink state, or the flexible state. For example, one or more consecutive symbols starting from a start symbol of the slot are in the off state, the downlink state, the uplink state, or the flexible state; one or more consecutive symbols ending with an end symbol of the slot are in the off state, the downlink state, the uplink state, or the flexible state; one or more consecutive symbols starting from a specific symbol in the middle of the slot are in the off state, the downlink state, the uplink state, or the flexible state; or any one or more symbols in a slot 3 are in the off state, the downlink state, the uplink state, or the flexible state. In consideration of communication overheads, the foregoing one or more bits may be a small quantity of bits (for example, one to six bits), to indicate a common uplink/downlink-state situation, for example, that some consecutive symbols are in the off state, the downlink state, the uplink state, or the flexible state. Alternatively, when communication overheads are not considered, the first information may indicate an off state, a downlink state, an uplink state, or a flexible state of each symbol in the slot by using a large quantity of bits. Certainly, the foregoing indication manner using the bitmap or the value combination is merely an example for ease of understanding by a reader. A specific indication manner of the first information is not limited in embodiments of the application. For example, the first information may alternatively indicate only that the corresponding symbol in the slot is in the downlink state or the uplink state, and a symbol that is in the slot and that is not indicated by the first information is in the flexible state by default. In addition, the first information is used above as an example. The foregoing indication manner of the first information may alternatively be applied to indicating another time unit in the periodicity in which the first time unit is located. To be specific, the system information may alternatively indicate an index of the another time unit, for example, indicate an index of the third time unit by using the third information; and indicate a symbol in the another time unit, for example, indicate, by using the third information, that a symbol in the third time unit is in the off state, the downlink state, the uplink state, or the flexible state. Details are not described again.

Manner 32: For example, the first time unit is a slot, and the first information may indicate an off state, a downlink state, an uplink state, or a flexible state of the slot at the slot level. For example, the first information may indicate, by using a plurality of value combinations of a plurality of bits, that the slot is in the off state, the downlink state, the uplink state, or the flexible state, in other words, all symbols in the slot are in the downlink state, the uplink state, or the flexible state, to implement slot-level indication. Locations of the plurality of bits in a bit sequence implicitly indicate the specific slot in a periodicity, in other words, implicitly indicate an index of the slot. For example, the system information may indicate, by using four value combinations of two bits, a specific state that is of each slot and that is in the four states. For example, if a value of the two bits is 00, it indicates that the slot is in the downlink state; if a value of the two bits is 01, it indicates that the slot is in the uplink state; if a value combination of the two bits is 10, it indicates that the slot is in the flexible state; or if a value combination of the two bits is 11, it indicates that the slot is in the off state. Certainly, that each state of the slot is indicated by the value combination of the two bits is merely an example, and constitutes no limitation. Each state of the slot may alternatively be indicated by a value combination of more bits, for example, a value combination of three bits or four bits. For example, the bit sequence is {1100101100}. From left to right, a value combination of the first and second bits is 11 and indicates that the first slot in a periodicity is in the off state, a value combination of the third and fourth bits is 00 and indicates that the second slot in the periodicity is in the downlink state, a value combination of the fifth and sixth bits is 10 and indicates that the third slot in the periodicity is in the flexible state, a value combination of the seventh and eighth bits is 11 and indicates that the fourth slot in the periodicity is in the off state, and a value combination of the ninth and tenth bits is 00 and indicates that the fifth slot in the periodicity is in the downlink state.

Optionally, in the manner 32, if the slot is in the flexible state, the first information may further indicate an uplink state or a downlink state of a symbol in the slot. For example, the first information indicates, by using an additional bit sequence, a quantity of consecutive symbols in the downlink state or the downlink state starting from a start symbol of the slot. For another example, the first information indicates, by using an additional bit sequence, a quantity of consecutive symbols in the downlink state or the downlink state ending with an end symbol of the slot. For still another example, the first information indicates respective downlink states or downlink states of a plurality of non-consecutive symbols in the slot by using an additional bit sequence.

Manner 33: For example, the first time unit is a symbol, and the first information may indicate an off state, a downlink state, an uplink state, or a flexible state of the symbol at the symbol level. For example, the first information may indicate, by using a plurality of value combinations of a plurality of bits, that the symbol is in the off state, the downlink state, the uplink state, or the flexible state, to implement symbol-level indication. Locations of the plurality of bits in a bit sequence implicitly indicate a location of the symbol in a slot, in other words, implicitly indicate an index of the symbol. For a specific implementation, refer to related descriptions in the foregoing manner 32. Details are not described again. Certainly, that each state of the symbol is indicated by a value combination of two bits is merely an example, and constitutes no limitation. Each state of the symbol may alternatively be indicated by a value combination of more bits, for example, a value combination of three bits or four bits.

It can be learned that, in a slot, a part of symbols in the slot may be in the downlink state, the uplink state, the flexible state, or the off state, or all symbols in the slot may be in the downlink state, the uplink state, the flexible state, or the off state. Therefore, for the slot, the slot may be in any one of the following states: the downlink-only state, the uplink-only state, the flexible-only state, or the off-only state, or may be in one or more of the following states: the partially downlink state, the partially uplink state, the partially flexible state, or the partially off state. These states of the slot may be collectively referred to as one or more of the following states of the slot: the downlink state, the uplink state, the flexible state, or the off state. The system information may indicate these states of the slot in a joint indication manner. These states of the slot are applicable to the time units in embodiments of the application, for example, the first time unit, the second time unit, or the third time unit. Certainly, these states of the slot may alternatively be replaced with a status of a time domain resource at another granularity, for example, a mini-slot, a subframe, or a radio frame. This is not limited.

It should be noted that the first information is used as an example in the "manner 32" and the "manner 33". The foregoing indication manner of the first information may alternatively be applied to indicating another time unit in the periodicity in which the first time unit is located. In other words, the system information may alternatively indicate a status of the another time unit, for example, indicate, by using a plurality of value combinations of a plurality of bits in the third information, that the third time unit is in the downlink state, the uplink state, or the flexible state. Details are not described again.

### Layer two: Radio resource control message

For example, the radio resource control message carries the second information. The second information may indicate that the second time unit is in the off state, the downlink state, the uplink state, or the flexible state at a slot level or a symbol level. For a specific implementation, refer to related descriptions in the foregoing "layer one: system information". Details are not described again. Optionally, the first access network device may further renumber an index of the second time unit, to reduce overheads caused by indicating the index of the second time unit by the second information.

It should be noted that a time unit indicated in the radio resource control message may be a time unit indicated by the first-layer system information as a time unit in the flexible state. The radio resource control message may further indicate that the time unit is in one or more of the following states: the downlink state, the uplink state, or the off state. Alternatively, a time unit indicated in the radio resource control message may be any time unit in a periodicity. In this case, if the system information already indicates that the time unit is in the downlink state or the uplink state, the radio resource control message may further indicate that the time unit is in the off state. However, if the system information already indicates that the time unit is in the flexible state, the radio resource control message may still further indicate that the time unit is in one or more of the following states: the downlink state, the uplink state, or the off state.

### Layer three: Group-downlink control information message

For example, the group-downlink control information message carries the second information. Manner 41: The second information may indicate that the second time unit is in the off state, the downlink state, the uplink state, or the flexible state at a slot level or a symbol level. For a specific implementation, refer to related descriptions in the foregoing "layer one: system information". Details are not described again.

Manner 42: The second information may indicate a format index of the second time unit, to indicate, by using the format index, that the second time unit is in one or more of the following states: the off state, the downlink state, the uplink state, or the flexible state, to further reduce the communication overheads. For example, the second time unit is a slot. The second information may indicate an index of the slot and a format index of the slot. The index of the slot is for determining the specific slot. The format index of the slot indicates one format of the slot. A format of each slot refers to respective downlink states, uplink states, or flexible states of all symbols in the slot. The format of the slot, namely, one or more of the following states of the slot: the off state, the downlink state, the uplink state, or the flexible state, includes the off state, the downlink state, the uplink state, or the flexible state of each symbol in the slot. On this basis, the first access network device may preconfigure a slot format table (or the slot format table may be predefined in a protocol), so that the terminal may determine, based on the slot format table, the one or more of the following states of the slot: the off state, the downlink state, the uplink state, or the flexible state. The slot format table may indicate a slot format corresponding to a format index of each slot. An example of the slot format table may be Table 3. In Table 3, X indicates that a corresponding symbol is in the off state, D indicates that a corresponding symbol is in the downlink state, U indicates that a corresponding symbol is in the uplink state, and F indicates that a corresponding symbol is in the flexible state. For a specific implementation in which the terminal traverses Table 3 based on a slot format, refer to related descriptions in the foregoing "layer three: group-DCI message". Details are not described again.

**Table 3**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | F | F | F | F |
| 4 | D | D | D | D | D | D | D | D | D | F | F | F | F | F |
| 5 | F | F | U | U | U | U | U | U | U | U | U | U | U | U |
| 6 | F | F | F | U | U | U | U | U | U | U | U | U | U | U |
| 7 | F | F | F | F | U | U | U | U | U | U | U | U | U | U |
| 8 | F | F | F | F | F | U | U | U | U | U | U | U | U | U |
| 9 | F | F | F | F | F | F | U | U | U | U | U | U | U | U |
| 10 | D | F | F | F | F | F | F | F | F | F | F | F | F | U |
| 11 | D | D | F | F | F | F | F | F | F | F | F | F | X | U |
| 12 | D | D | D | F | F | F | F | F | F | F | X | X | X | U |
| 13 | D | F | F | F | F | F | F | F | F | F | F | F | U | U |
| 14 | D | D | D | X | F | F | F | F | F | F | F | F | U | U |
| 15 | D | X | X | F | F | F | F | F | F | F | F | U | U | U |
| 16 | D | D | X | F | F | F | F | F | F | F | X | U | U | U |
| 17 | D | D | D | X | X | F | F | F | F | X | X | U | U | U |
| 18 | D | D | D | D | D | D | D | D | D | D | X | X | F | U |

Manner 43: The second information may indicate one format index combination of one or more consecutive time units. The one or more consecutive slots may be one or more consecutive slots starting from the first slot in slots indicated by the first-layer system information or the second-layer downlink control information message as slots in the flexible state. Alternatively, the one or more consecutive slots may be any consecutive slots in a periodicity. This is not limited in the application. The one or more consecutive time units include the second time unit, and the format index combination includes a format index of the second time unit. In other words, the second information may indicate, by indicating the format index of the second time unit, that the second time unit is in one or more of the following states: the off state, the downlink state, the uplink state, or the flexible state, to further reduce the communication overheads. For example, the second time unit is a slot. The first access network device may preconfigure, for the terminal, a slot format combination set, an SFI-RNTI, and a group-downlink control information message payload (a message payload for short below) that correspond to the terminal. The slot format combination set includes a format combination index of the one or more consecutive slots, and each format combination index corresponds to one format combination of the one or more consecutive slots. A format of each slot means that each symbol in the slot is in the off state, the downlink state, the uplink state, or the flexible state. In other words, the format of the slot includes the off state, the downlink state, the uplink state, or the flexible state of each symbol in the slot. In other words, the format of each slot may indicate that the slot is in one or more of the following states: the off state, the downlink state, the uplink state, or the flexible state. A format combination indication of the one or more consecutive slots may indicate a status of the one or more slots. The SFI-RNTI is used by the first access network device to scramble the group-downlink control information message. The message payload indicates a location of the second information in the group-downlink control information message. In this way, the terminal may perform blind detection on a received downlink control information message based on the SFI-RNTI. If the terminal can successfully perform descrambling, it indicates that the terminal receives a downlink control information message indicating a status of a time unit, namely, the group-downlink control information message. In this way, the terminal may determine the second information from the group-downlink control information message based on the message payload. The terminal may determine, from the slot format combination set based on a format combination index indicated by the second information, a slot format combination corresponding to the format combination index. Finally, the terminal may traverse, based on the slot format combination, a slot format table predefined in a protocol, to determine the format of each of the one or more slots, in other words, determine that the second time unit is in the one or more of the following states: the off state, the downlink state, the uplink state, or the flexible state. An example of the slot format table may also be Table 3. For a specific implementation in which the terminal traverses Table 3 in the protocol based on the slot format combination, refer to related descriptions in the foregoing "layer three: group-DCI message". Details are not described again.

It may be understood that the second time unit is used as an example in the "manner 41" to the "manner 43". The foregoing indication manner for the second time unit may alternatively be applied to another time unit in the periodicity in which the second time unit is located. In other words, the group-downlink control information message may alternatively indicate a status of the another time unit, for example, indicate, by using the third information, that the third time unit is in the downlink state, the uplink state, or the flexible state. Details are not described again.

It should be noted that a time unit indicated in the group-downlink control information message may be a time unit indicated by the first-layer system information or the second-layer radio resource control message as a time unit in the flexible state. The group-downlink control information message may further indicate that the time unit is in one or more of the following states: the downlink state, the uplink state, or the off state. Alternatively, a time unit indicated in the group-downlink control information message may be any time unit in the periodicity. In this case, if the system information or the radio resource control message already indicates that the time unit is in the downlink state or the uplink state, the group-downlink control information message may further indicate that the time unit is in the off state. However, if the system information or the radio resource control message already indicates that the time unit is in the flexible state, the group-downlink control information message may further indicate that the time unit is in one or more of the following states: the downlink state, the uplink state, or the off state.

### Layer four: Device-downlink control information message

For example, the device-downlink control information message carries the second information. The second information may indicate, by using a format index, that the second time unit is in one or more of the following states: the off state, the downlink state, the uplink state, or the flexible state. For a specific implementation, refer to related descriptions in the foregoing "layer three: group-downlink control information message". Details are not described again. However, different from the foregoing "layer three: group-downlink control information message", the device-downlink control information message may indicate a format index of a current slot, namely, a slot (including the second time unit) in which the device-downlink control information message is currently located, to more flexibly indicate a status at a finer granularity.

It should be noted that a time unit indicated in the device-downlink control information message may be a time unit indicated by the first-layer system information, the second-layer radio resource control message, or the third-layer device-downlink control information message as a time unit in the flexible state. In this case, the device-downlink control information message may further indicate that the time unit is in one or more of the following states: the downlink state, the uplink state, or the off state. Alternatively, a time unit indicated in the device-downlink control information message may be any time unit in a periodicity. In this case, if the system information, the radio resource control message, or the device-downlink control information message already indicates that the time unit is in the downlink state or the uplink state, the device-downlink control information message may further indicate that the time unit is in the off state. However, if the system information, the radio resource control message, or the device-downlink control information message already indicates that the time unit is in the flexible state, the device-downlink control information message may further indicate that the time unit is in one or more of the following states: the downlink state, the uplink state, or the off state.

(b) in FIG. 6 shows a frame structure of separate indication in the TDD system. In the TDD system, the separate indication means that the downlink state, the uplink state, or the flexible state of a time unit is classified as one type of state, and the off state or the on state of the time unit is classified as another type of state, so that the two types of states of the time unit are separately indicated by using two pieces of information. In this case, on the basis that the first information indicates that the first time unit is in the off state or the on state, or the second information indicates that the second time unit is in the off state or the on state, the third information may indicate that the third time unit is in one or more of the following states: the downlink state, the uplink state, or the flexible state, where the third time unit and the first time unit may be a same time unit or different time units, or the third time unit and the second time unit may be a same time unit or different time units. This is not limited in the application.

In the separate indication, for a specific indication principle of the first information, refer to related descriptions in "S502"; for a specific indication principle of the second information, refer to related descriptions in the foregoing "first possible application scenario"; and for a specific indication principle of the third information, refer to related descriptions of the first information in the foregoing "joint indication". Details are not described again.

### Case B: Full-duplex system

In the full-duplex system, a carrier associated with a time unit can be for a sending operation, and is referred to as a transmit frame; and can be also for a receiving operation, and is also referred to as a receive frame. In this case, if a time unit is associated with a transmit frame, that the time unit is in the off state indicates that no sending operation is performed in the time unit, and that the time unit is in the on state indicates that a sending operation can be performed in the time unit. Similarly, if a time unit is associated with a receive frame, that the time unit is in the off state indicates that no receiving operation is performed in the time unit, and that the time unit is in the on state indicates that a receiving operation can be performed in the time unit. If a time unit is in the receive state, it indicates that a receiving operation can be performed in a receive frame associated with the time unit. If a time unit is in the transmit state, it indicates that a sending operation can be performed in a transmit frame associated with the time unit. If a time unit is in the flexible state, it indicates that a status of the time unit may be further configured, for example, configured as one or more of the following states: the transmit-only state, the partial transmit state, the receive-only state, the partial receive state, the off-only state, the partially off state, or the like. The following uses the first time unit, the second time unit, and the third time unit as examples for description.

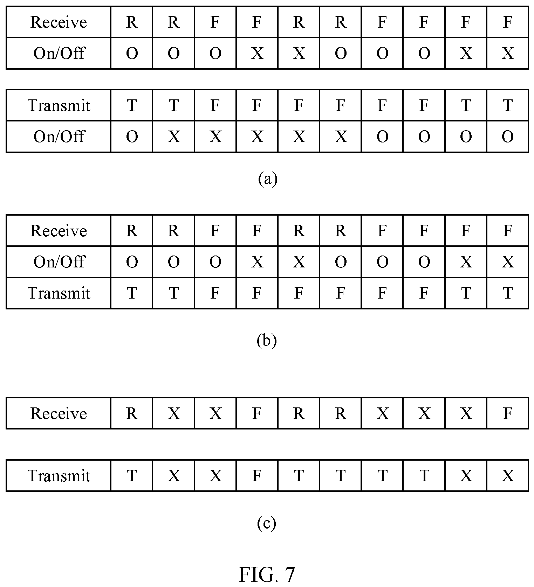

Refer to FIG. 7. (a) in FIG. 7 or (b) in FIG. 7 shows a frame structure of separate indication in the full-duplex system. In the full-duplex system, the separate indication means that a receive state and a flexible state of a time unit are classified as a first type of state, a transmit state and the flexible state of the time unit are classified as a second type of state, and an off state or an on state of the time unit is classified as a third type of state, so that the three types of states of the time unit are separately indicated by using three pieces of information. In this case, on the basis that the first information indicates that the first time unit is in the off state or the on state, or the second information indicates that the second time unit is in the off state or the on state, the third information may indicate that the third time unit is in a receive state or a flexible state, or indicate that the third time unit is in the transmit state or the flexible state. The third time unit and the first time unit may be a same time unit or different time units, or the third time unit and the second time unit may be a same time unit or different time units. This is not limited in the application.

It can be learned from the foregoing related descriptions of the first information and the second information that, the first information may be carried in signaling at different levels, for example, signaling at the foregoing four levels, to indicate, in the nested manner, that the first time unit is in the off state or the on state. Similarly, the second information may be carried in signaling at different levels, to indicate, in the nested manner, that the second time unit is in the off state or the on state. On this basis, the third information may be carried in signaling at different levels, to indicate, in the nested manner, that the third time unit is in the receive state or the flexible state, or that the third time unit is in the transmit state or the flexible state. The following uses an example in which the third information is carried in signaling at each layer, to describe a case in which the third time unit is in the receive state or the flexible state. For details about that the third time unit is in the transmit state or the flexible state, reference may be made for understanding. Details are not described again.

### Layer one: System information

For example, the system information carries the first information and the third information. For example, as shown in (a) in FIG. 7, the first information may indicate that the first time unit is associated with a receive frame and/or a transmit frame, so that the terminal can determine a frame type to which the off state or the on state of the first time unit is applicable, to avoid incorrect sending or receiving performed by the terminal. Alternatively, for example, as shown in (b) in FIG. 7, the first time unit may be associated with a receive frame and/or a transmit frame by default without indication by signaling, to reduce communication overheads. The first information may further indicate the off state or the on state of the first time unit at a slot level or a symbol level. For a specific implementation principle, refer to related descriptions in S502. Details are not described again. The third information may indicate that the third time unit is in the receive state or the flexible state at the slot level or the symbol level.

Manner 51: The third time unit is a slot, and the third information may indicate a receive state or a flexible state of the slot at the slot level. For example, the third information may indicate an index of the slot, to indicate that the slot is in the receive state, to be specific, all symbols in the slot are in the receive state, so that the receive state is indicated at the slot level. The index of the slot may be an index of the slot in a periodicity in which the slot is located (namely, a periodicity in which the third time unit is located). A slot not indicated by the third information is in the flexible state by default.

Manner 52: The third time unit is a slot, and the third information may indicate a receive state or a flexible state of the slot at the symbol level. For example, the third information may indicate an index of the slot, and the index of the slot may be an index of the slot in a periodicity in which the slot is located (namely, a periodicity in which the third time unit is located). On this basis, the third information may indicate that a symbol corresponding to the index (namely, a symbol in the slot) is in the receive state or the flexible state, so that the receive state or flexible state is indicated at the symbol level. For example, the third information may indicate, by using a plurality of value combinations of one or more bits, that the corresponding symbol in the slot is in the receive state or the flexible state. For example, one or more consecutive symbols starting from a start symbol of the slot are in the receive state or the flexible state; one or more consecutive symbols ending with an end symbol of the slot are in the receive state or the flexible state; one or more consecutive symbols starting from a specific symbol in the middle of the slot are in the receive state or the flexible state; or any one or more symbols in the slot are in the receive state or the flexible state. In consideration of communication overheads, the foregoing one or more bits may be a small quantity of bits (for example, one to six bits), to indicate a common receive-state or flexible-state situation, for example, that some consecutive symbols are in the receive state or the flexible state. Alternatively, when communication overheads are not considered, the third information may indicate, by using a large quantity of bits, that each symbol in a slot 3 is in the receive state or the flexible state. Certainly, the foregoing indication manner using the bit sequence is merely an example for ease of understanding by a reader. A specific indication manner of the third information is not limited in embodiments of the application. For example, the third information may alternatively indicate only that the corresponding symbol in the slot is in the receive state, and a symbol that is in the slot and that is not indicated by the third information is in the flexible state by default. In addition, the third time unit is used above as an example. The foregoing indication manner for the third time unit may alternatively be applied to another time unit in the periodicity in which the third time unit is located. To be specific, the system information may alternatively indicate an index of the another time unit and that a symbol in the another time unit is in the receive state or the flexible state. Details are not described again.

Manner 53: The third time unit is a symbol, and the third information may indicate a receive state or a flexible state of the symbol at the symbol level. For example, the third information may indicate an index of the symbol, to indicate that the symbol is in the receive state, so that the receive state is indicated at the symbol level. The index of the symbol may be an index of the symbol in a periodicity in which the symbol is located (namely, a periodicity in which the third time unit is located). A symbol not indicated by the third information is in the flexible state by default.

### Layer two: Radio resource control message

For example, the system information carries the second information and the third information. For example, as shown in (a) in FIG. 7, the second information may indicate that the second time unit is associated with a receive frame and/or a transmit frame, so that the terminal can determine a frame type to which the off state or the on state of the second time unit is applicable, to avoid incorrect sending or receiving performed by the terminal. Alternatively, for example, as shown in (b) in FIG. 7, the second time unit may be associated with a receive frame and/or a transmit frame by default without indication by signaling, to reduce communication overheads. In FIG. 7, "R" represents the receive state, "F" represents the flexible state, "T" represents the transmit state, "O" represents the on state, and "X" represents the off state. The second information may further indicate the off state or the on state of the second time unit at a slot level or a symbol level. For a specific implementation principle, refer to related descriptions in the foregoing "first possible application scenario". Details are not described again. The third information may indicate that the third time unit is in the receive state or the flexible state at the slot level or the symbol level, or may indicate a transmit state or a flexible state of a transmit frame at the slot level or the symbol level. For a specific implementation, refer to related descriptions in the foregoing "layer one: system information". Details are not described again. Optionally, the first access network device may further renumber an index of the third time unit, to reduce overheads caused by indicating the index of the third time unit by the third information.

It may be understood that a time unit indicated in the radio resource control message may be a time unit indicated by the first-layer system information as a time unit in the flexible state. A time unit indicated by the system information as a time unit in the receive state or the transmit state cannot be changed by using the radio resource control message.

### Layer three: Group-downlink control information message

For example, the group-downlink control information message carries the second information and the third information. Manner 61: For example, as shown in (a) in FIG. 7, the second information may indicate that the second time unit is associated with a receive frame and/or a transmit frame, so that the terminal can determine a frame type to which the off state or the on state of the second time unit is applicable, to avoid incorrect sending or receiving performed by the terminal. Alternatively, for example, as shown in (b) in FIG. 7, the second time unit may be associated with a receive frame and/or a transmit frame by default without indication by signaling, to reduce communication overheads. The second information may further indicate the off state or the on state of the second time unit at a slot level or a symbol level. For a specific implementation principle, refer to related descriptions in the foregoing "first possible application scenario". Details are not described again. The third information may indicate that the third time unit is in the receive state or the flexible state at the slot level or the symbol level, or may indicate a transmit state or a flexible state of a transmit frame at the slot level or the symbol level. For a specific implementation, refer to related descriptions in the foregoing "layer one: system information". Details are not described again.

Manner 62: An indication principle of the second information is similar to that in the manner 61, and details are not described again. The third information may indicate a format index of the third time unit, to indicate, by using the format index, that the third time unit is in the receive state or the flexible state. This further reduces communication overheads. For example, the third time unit is a slot. The third information may indicate an index of the slot and a format index of the slot. The index of the slot is for determining the specific slot. The format index of the slot indicates one format of the slot. A format of each slot means that each symbol in the slot is in the receive state or the flexible state. In other words, the format of the slot, namely, the receive state or the flexible state of the slot, includes the receive state or the flexible state of each symbol in the slot. On this basis, the first access network device may preconfigure a slot format table (or the slot format table may be predefined in a protocol), so that the terminal may determine, based on the slot format table, that the slot is in the receive state or the flexible state. The slot format table may indicate a slot format corresponding to a format index of each slot. An example of the slot format table may be Table 4. In Table 4, R indicates that a corresponding symbol is in the receive state, T indicates that a corresponding symbol is in the transmit state, and F indicates that a corresponding symbol is in the flexible state. In addition, that the receive state, the transmit state, and the flexible state are configured in a same table is used as an example in Table 3, and constitutes no limitation. The receive state, the transmit state, and the flexible state may alternatively be configured in different tables. For example, the receive state and the flexible state are configured in Table 5, and the transmit state and the flexible state are configured in Table 6. For a specific implementation in which the terminal traverses Table 4 based on a slot format, refer to related descriptions in the foregoing "layer three: group-DCI message". Details are not described again.

**Table 4**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | R | R | R | R | R | R | R | R | R | R | R | R | R | R |
| 1 | T | T | T | T | T | T | T | T | T | T | T | T | T | T |
| 2 | F | F | F | F | F | F | F | F | F | F | F | F | F | F |
| 3 | R | R | R | R | R | R | R | R | R | R | R | R | R | F |
| 4 | R | R | R | R | R | R | R | R | R | R | R | R | F | F |
| 5 | R | R | R | R | R | R | R | R | R | R | R | F | F | F |
| 6 | R | R | R | R | R | R | R | R | R | R | F | F | F | F |
| 7 | R | R | R | R | R | R | R | R | R | F | F | F | F | F |
| 8 | F | F | F | F | F | F | F | F | F | F | F | F | F | T |
| 9 | F | F | F | F | F | F | F | F | F | F | F | F | T | T |
| 10 | F | T | T | T | T | T | T | T | T | T | T | T | T | T |
| 11 | F | F | T | T | T | T | T | T | T | T | T | T | T | T |
| 12 | F | F | F | T | T | T | T | T | T | T | T | T | T | T |
| 13 | F | F | F | F | T | T | T | T | T | T | T | T | T | T |
| 14 | F | F | F | F | F | T | T | T | T | T | T | T | T | T |
| 15 | F | F | F | F | F | F | T | T | T | T | T | T | T | T |
| 16 | R | F | F | F | F | F | F | F | F | F | F | F | F | F |
| 17 | R | R | F | F | F | F | F | F | F | F | F | F | F | F |
| 18 | R | R | R | F | F | F | F | F | F | F | F | F | F | F |
| 19 | R | F | F | F | F | F | F | F | F | F | F | F | F | T |
| 20 | R | R | F | F | F | F | F | F | F | F | F | F | F | T |
| 21 | R | R | R | F | F | F | F | F | F | F | F | F | F | T |
| 22 | R | F | F | F | F | F | F | F | F | F | F | F | T | T |
| 23 | R | R | F | F | F | F | F | F | F | F | F | F | T | T |
| 24 | R | R | R | F | F | F | F | F | F | F | F | F | T | T |
| 25 | R | F | F | F | F | F | F | F | F | F | F | T | T | T |
| 26 | R | R | F | F | F | F | F | F | F | F | F | T | T | T |
| 27 | R | R | R | F | F | F | F | F | F | F | F | T | T | T |
| 28 | R | R | R | R | R | R | R | R | R | R | R | R | F | T |
| 29 | R | R | R | R | R | R | R | R | R | R | R | F | F | T |
| 30 | R | R | R | R | R | R | R | R | R | R | F | F | F | T |

**Table 5**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | R | R | R | R | R | R | R | R | R | R | R | R | R | R |
| 1 | F | F | F | F | F | F | F | F | F | F | F | F | F | F |
| 2 | R | R | R | R | R | R | R | R | R | R | R | R | R | F |
| 3 | R | R | R | R | R | R | R | R | R | R | R | R | F | F |
| 4 | R | R | R | R | R | R | R | R | R | R | R | F | F | F |
| 5 | R | R | R | R | R | R | R | R | R | R | F | F | F | F |
| 6 | R | R | R | R | R | R | R | R | R | F | F | F | F | F |
| 7 | R | F | F | F | F | F | F | F | F | F | F | F | F | F |
| 8 | R | R | F | F | F | F | F | F | F | F | F | F | F | F |
| 9 | R | R | R | F | F | F | F | F | F | F | F | F | F | F |
| 10 | R | R | R | R | R | R | R | R | R | R | R | R | R | R |

**Table 6**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | T | T | T | T | T | T | T | T | T | T | T | T | T | T |
| 1 | F | F | F | F | F | F | F | F | F | F | F | F | F | F |
| 2 | T | T | T | T | T | T | T | T | T | T | T | T | T | F |
| 3 | T | T | T | T | T | T | T | T | T | T | T | T | F | F |
| 4 | T | T | T | T | T | T | T | T | T | T | T | F | F | F |
| 5 | T | T | T | T | T | T | T | T | T | T | F | F | F | F |
| 6 | T | T | T | T | T | T | T | T | T | F | F | F | F | F |
| 7 | F | F | F | F | F | F | F | F | F | F | T | T | T | T |
| 8 | F | F | F | F | F | F | F | F | F | F | F | T | T | T |
| 9 | F | F | F | F | F | F | F | F | F | F | F | F | T | T |
| 10 | T | T | T | T | T | T | T | T | T | T | T | T | T | T |

Manner 63: An indication principle of the second information is similar to that in the manner 61, and details are not described again. The third information may indicate one format index combination of one or more consecutive time units. The one or more consecutive slots may be one or more consecutive slots starting from the first slot in slots indicated by the first-layer system information or the second-layer downlink control information message as slots in the flexible state. The one or more consecutive time units include the third time unit, and the format index combination includes a format index of the third time unit. In this case, the third information may indicate the format index of the third time unit, to indicate that the third time unit is in the receive state or the flexible state. This further reduces communication overheads. For example, the third time unit is a slot. The first access network device may preconfigure, for the terminal, a slot format combination set, an SFI-RNTI, and a message payload that correspond to the terminal. The slot format combination set includes a format combination index of the one or more consecutive slots, and each format combination index corresponds to one format combination of the one or more consecutive slots. A format of each slot means that each symbol in the slot is in the receive state or the flexible state. In other words, the format of the slot includes the receive state or the flexible state of each symbol in the slot. In other words, the format of each slot may indicate that the slot is in the receive state or the flexible state, and a format combination indication of the one or more consecutive slots may indicate a receive state or a flexible state of the one or more slots. The SFI-RNTI is used by the first access network device to scramble the group-downlink control information message. The message payload indicates a location of the third information in the group-downlink control information message. In this way, the terminal may perform blind detection on a received downlink control information message based on the SFI-RNTI. If the terminal can successfully perform descrambling, it indicates that the terminal receives a downlink control information message indicating a status of a time unit, namely, the group-downlink control information message. In this way, the terminal may determine the third information from the group-downlink control information message based on the message payload. The terminal may determine, from the slot format combination set based on a format combination index indicated by the third information, a slot format combination corresponding to the format combination index. Finally, the terminal may traverse, based on the slot format combination, a slot format table predefined in a protocol, to determine the format of each of the one or more slots, in other words, determine the receive state or the flexible state of the third time unit. An example of the slot format table may also be Table 4. For a specific implementation in which the terminal traverses Table 4 based on the slot format combination, refer to related descriptions in the foregoing "layer three: group-DCI message". Details are not described again.

It may be understood that a time unit indicated in the group-downlink control information message may be a time unit indicated by the first-layer system information or the second-layer radio resource control message as a time unit in the flexible state. A time unit indicated by the system information or the radio resource control message as a time unit in the receive state or the transmit state cannot be changed by using the group-downlink control information message.

### Layer four: Device-downlink control information message

For example, the device-downlink control information message carries the second information and the third information. For an indication principle of the second information, refer to related descriptions in the foregoing "layer two: radio resource control message". Details are not described again. The third information may indicate, by using a format index, that the third time unit is in a receive state or a flexible state. For a specific implementation, refer to related descriptions in the foregoing "layer three: group-downlink control information message". Details are not described again. However, different from the foregoing "layer three: group-downlink control information message", the device-downlink control information message may indicate a format index of a current slot, namely, a slot (including the third time unit) in which the device-downlink control information message is currently located, to more flexibly indicate a status at a finer granularity.

It may be understood that a time unit indicated in the device-downlink control information message may be a time unit indicated by the first-layer system information, the second-layer radio resource control message, or the third-layer group-downlink control information message as a time unit in the flexible state. A time unit indicated by the system information, the radio resource control message, or the group-downlink control information message as a time unit in the receive state or the transmit state cannot be changed by using the device-downlink control information message.

It should be noted that, in the foregoing four layers of signaling, for signaling at a same level, that the third information indicates that the third time unit is in the receive state or the flexible state and that the third information indicates that the third time unit is in the transmit state or the flexible state may be implemented by using same signaling. For example, third information in one piece of signaling indicates that the third time unit is in the receive state or the flexible state, and indicates that the third time unit is in the transmit state or the flexible state. For example, as shown in (a) in FIG. 7, the third information indicates that the first slot on the left is in the receive state, and also indicates that the slot is in the transmit state. Alternatively, that the third information indicates that the third time unit is in the receive state or the flexible state and that the third information indicates that the third time unit is in the transmit state or the flexible state may be implemented by using different signaling. For example, third information in signaling 1 indicates that the third time unit is in the receive state or the flexible state, and third information in signaling 2 indicates that the third time unit is in the transmit state or the flexible state. The signaling 1 and the signaling 2 may have different signaling formats, for example, are DCI in different formats. Alternatively, the signaling 1 and the signaling 2 carry indication information. For example, the indication information occupies one bit. If a value of the bit in the signaling 1 is 1, it means that the third information in the signaling 1 indicates that the third time unit is in the receive state or the flexible state; or if a value of the bit in the signaling 2 is 0, it means that the third information in the signaling 2 indicates that the third time unit is in the transmit state or the flexible state. Optionally, the third information in the signaling 1 may be carried after the indication information, and the third information in the signaling 2 may also be carried after the indication information, to help the terminal to obtain the third information.

Refer to FIG. 7. (c) in FIG. 7 shows a frame structure of joint indication in the full-duplex system. In the full-duplex system, when a time unit is in an on state, uplink and downlink transmission may be performed in the time unit. In other words, the time unit is also in one or more of the following states: the off state, the receive state, the transmit state, or the flexible state. In other words, that the time unit is in the on state may be replaced with (in other words, equivalent to): The time unit is in the receive state, the transmit state, or the flexible state. Therefore, in the joint indication, the on state of the time unit may not be indicated, but the off state, the receive state, or the flexible state of the time unit is classified as one type of state, and the off state, the transmit state, or the flexible state of the time unit is classified as another type of state, to separately indicate the two types of states of the time unit by using two pieces of information. In other words, if the first information indicates that the first time unit is in the off state, or the second information indicates that the second time unit is in the off state, the third information cannot indicate that the first time unit or the second time unit is further in one or more of the following states: the receive state, the transmit state, or the flexible state, but needs to indicate that another time unit, for example, the third time unit, is in one or more of the following states: the off state, the receive state, the transmit state, or the flexible state. Therefore, in the joint indication, the first time unit and the third time unit may be different time units, or the second time unit and the third time unit may be different time units. Further, it can be learned from related descriptions in the foregoing first possible application scenario that the first access network device may indicate, in the nested manner by using the foregoing four layers of signaling, that each time unit is in the off state. The following provides descriptions by using the first information and the second information as examples.

### Layer A: System information

For example, the system information carries the first information. The first information may indicate that the first time unit is in the off state, the receive state, or the flexible state at a slot level or a symbol level. The following provides detailed descriptions.

Manner 71: For example, the first time unit is a slot, and the first information may indicate an off state, a receive state, or a flexible state of the slot at the symbol level. For example, the first information may indicate an index of the slot. For a specific implementation, refer to related descriptions in the foregoing "manner 31". Details are not described again. On this basis, the first information may indicate that a symbol corresponding to the index (a symbol in the slot) is in the receive state or the flexible state, in other words, indicate the receive state or the flexible state of a slot 3 at the symbol level. For a specific implementation, refer to related descriptions in the foregoing "manner 31". Details are not described again. In consideration of communication overheads, the foregoing one or more bits may be a small quantity of bits (for example, one to six bits), to indicate a common receive-state or flexible-state situation, for example, that some consecutive symbols are in the receive state or the flexible state. Alternatively, when communication overheads are not considered, the first information may indicate, by using a large quantity of bits, that each symbol in the slot is in the receive state or the flexible state. Certainly, the foregoing indication manner of the first information is merely an example for ease of understanding by a reader. A specific indication manner of the first information is not limited in embodiments of the application. For example, the first information may alternatively indicate only that a corresponding symbol in the slot is in the receive state, and a symbol that is in the slot and that is not indicated by the first information is in the flexible state by default. In addition, the first information is used above as an example. The foregoing indication manner of the first information may alternatively be applied to indicating another time unit in the periodicity in which the first time unit is located. To be specific, the system information may alternatively indicate an index of the another time unit, for example, indicate an index of the third time unit by using the third information; and indicate a symbol in the another time unit, for example, indicate, by using the third information, that a symbol in the third time unit is in the off state, the receive state, or the flexible state. Details are not described again.

Manner 72: For example, the first time unit is a slot, and the first information may indicate an off state, a receive state, or a flexible state of the slot at the slot level. For example, the first information may indicate, by using a plurality of value combinations of a plurality of bits, that the slot is in the off state, the receive state, or the flexible state, in other words, all symbols in the slot are in the off state, the receive state, or the flexible state, to implement slot-level indication. For a specific implementation, refer to related descriptions in the foregoing "manner 32". Details are not described again.

Optionally, in the manner 72, if the slot is in the flexible state, the first information may further indicate a receive state or a transmit state of a symbol in the slot. For example, the first information indicates, by using an additional bit sequence, a quantity of consecutive symbols in the receive state or the transmit state starting from a start symbol of the slot. For another example, the first information indicates, by using an additional bit sequence, a quantity of consecutive symbols in the receive state or the transmit state ending with an end symbol of the slot. For still another example, the first information indicates respective receive states or transmit states of a plurality of non-consecutive symbols in the slot by using an additional bit sequence.

Manner 73: For example, the first time unit is a symbol, and the first information may indicate an off state, a receive state, or a flexible state of the symbol at the symbol level. The first information may indicate, by using a plurality of value combinations of a plurality of bits, that the symbol is in the off state, the receive state, or the flexible state, to implement symbol-level indication. Locations of the plurality of bits in a bit sequence implicitly indicate a location of the symbol in a slot, in other words, implicitly indicate an index of the symbol. For a specific implementation, refer to related descriptions in the foregoing "manner 72". Details are not described again.

It should be noted that the first information is used as an example in the "manner 72" and the "manner 73". The foregoing indication manner of the first information may alternatively be applied to indicating another time unit in the periodicity in which the first time unit is located. In other words, the system information may alternatively indicate a status of the another time unit, for example, indicate, by using a plurality of value combinations of a plurality of bits in the third information, that the third time unit is in the off state, the receive state, or the flexible state. Details are not described again.

### Layer B: Radio resource control message

For example, the radio resource control message carries the second information. The second information may indicate that the second time unit is in the off state, the receive state, or the flexible state at a slot level or a symbol level. For a specific implementation, refer to related descriptions in the foregoing "layer A: system information". Details are not described again. Optionally, the first access network device may further renumber an index of the second time unit, to reduce overheads caused by indicating the index of the second time unit by the second information.

It should be noted that a time unit indicated in the radio resource control message may be a time unit indicated by the layer-A system information as a time unit in the flexible state. The radio resource control message may further indicate that the time unit is in one or more of the following states: the off state, the receive state, or the transmit state. Alternatively, a time unit indicated in the radio resource control message may be any time unit in a periodicity. In this case, if the system information already indicates that the time unit is in the receive state, the radio resource control message may further indicate that the time unit is in the off state. However, if the system information already indicates that the time unit is in the flexible state, the radio resource control message may still further indicate that the time unit is in one or more of the following states: the off state, the receive state, or the transmit state.

### Layer C: Group-downlink control information message

For example, the group-downlink control information message carries the second information. Manner 81: The second information may indicate that the second time unit is in the off state, the receive state, or the transmit state at a slot level or a symbol level. For a specific implementation, refer to related descriptions in the foregoing "layer A: system information". Details are not described again.

Manner 82: The second information may indicate a format index of the second time unit, to indicate, by using the format index, that the second time unit is in one or more of the following states: the off state, the receive state, or the flexible state, to further reduce the communication overheads. For example, the second time unit is a slot. The second information may indicate an index of the slot and a format index of the slot. The index of the slot is for determining the specific slot. The format index of the slot indicates one format of the slot. A format of each slot refers to respective downlink states, uplink states, or flexible states of all symbols in the slot. The format of the slot, namely, one or more of the following states of the slot: the off state, the receive state, or the flexible state, includes the off state, the receive state, or the flexible state of each symbol in the slot. On this basis, the first access network device may preconfigure a slot format table (or the slot format table may be predefined in a protocol), so that the terminal may determine, based on the slot format table, the one or more of the following states of the slot: the off state, the receive state, or the flexible state. The slot format table may indicate a slot format corresponding to a format index of each slot. An example of the slot format table may be Table 7. In Table 7, X indicates that a corresponding symbol is in the off state, R indicates that a corresponding symbol is in the receive state, T indicates that a corresponding symbol is in the transmit state, and F indicates that a corresponding symbol is in the flexible state. In addition, that the off state, the receive state, the transmit state, and the flexible state are configured in a same table is used as an example in Table 7, and constitutes no limitation. The off state, the receive state, the transmit state, and the flexible state may alternatively be configured in different tables. For example, the off state, the receive state, and the flexible state are configured in Table 8, and the off state, the transmit state, and the flexible state are configured in Table 9. For a specific implementation in which the terminal traverses Table 7 based on a slot format, refer to related descriptions in the foregoing "layer three: group-DCI message". Details are not described again.

**Table 7**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | R | R | R | R | R | R | R | R | R | R | R | R | R | R |
| 1 | T | T | T | T | T | T | T | T | T | T | T | T | T | T |
| 2 | F | F | F | F | F | F | F | F | F | F | F | F | F | F |
| 3 | R | R | R | R | R | R | R | R | R | R | R | R | R | F |
| 4 | R | R | R | R | R | R | R | R | R | R | R | R | F | F |
| 5 | R | R | R | R | R | R | R | R | R | R | R | F | F | F |
| 6 | R | R | R | R | R | R | R | R | R | R | F | F | F | F |
| 7 | R | R | R | R | R | R | R | R | R | F | F | F | F | F |
| 8 | F | F | F | F | F | F | F | F | F | F | F | F | F | T |
| 9 | F | F | F | F | F | F | F | F | F | F | F | F | T | T |
| 10 | F | T | T | T | T | T | T | T | T | T | T | T | T | T |
| 11 | F | F | T | T | T | T | T | T | T | T | T | T | T | T |
| 12 | X | F | F | T | T | T | T | T | T | T | T | T | T | T |
| 13 | X | X | F | F | T | T | T | T | T | T | T | T | T | T |
| 14 | X | X | X | F | F | T | T | T | T | T | T | T | T | T |
| 15 | X | X | X | F | F | F | T | T | T | T | T | T | T | T |
| 16 | R | F | F | F | F | F | F | F | X | X | X | X | X | X |
| 17 | R | R | F | F | F | F | F | F | F | F | F | X | X | X |
| 18 | R | R | R | F | F | F | F | F | F | F | F | F | X | X |
| 19 | R | X | X | X | F | F | F | F | F | F | F | X | X | T |
| 20 | R | R | X | X | F | F | F | F | F | X | X | X | X | T |
| 21 | R | R | R | F | F | F | F | F | F | F | F | F | F | T |
| 22 | R | X | X | F | F | F | F | F | F | F | F | X | T | T |
| 23 | R | R | F | F | F | F | F | F | F | F | F | F | T | T |
| 24 | R | R | R | F | F | F | F | F | F | F | F | F | T | T |
| 25 | R | F | F | F | F | F | F | F | F | F | F | T | T | T |
| 26 | R | R | F | F | F | F | F | F | F | F | F | T | T | T |
| 27 | R | R | R | F | F | F | F | F | F | F | F | T | T | T |
| 28 | R | R | R | R | R | R | R | R | R | R | R | R | F | T |
| 29 | R | R | R | R | R | R | R | R | R | R | R | F | F | T |
| 30 | R | R | R | R | R | R | R | R | R | R | F | F | F | T |

**Table 8**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | R | R | R | R | R | R | R | R | R | R | R | R | R | R |
| 1 | F | F | F | F | F | F | F | F | F | F | F | F | F | F |
| 2 | R | R | R | R | R | R | R | R | R | R | R | R | R | F |
| 3 | R | R | R | R | R | R | R | R | R | R | R | R | F | F |
| 4 | R | R | R | R | R | R | R | R | R | R | R | F | F | F |
| 5 | R | R | R | R | R | R | R | R | R | R | F | F | F | X |
| 6 | R | R | R | R | R | R | R | R | R | F | F | F | X | X |
| 7 | R | X | X | F | F | F | F | F | F | F | F | F | X | X |
| 8 | R | R | F | F | F | F | F | F | F | F | F | X | X | X |
| 9 | R | R | R | F | F | F | F | F | F | F | X | X | X | X |
| 10 | R | R | R | R | R | R | R | R | R | R | R | R | R | R |

**Table 9**

| Format index | Indexes of symbols in slots | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | T | T | T | T | T | T | T | T | T | T | T | T | T | T |
| 1 | F | F | F | F | F | F | F | F | F | F | F | F | F | F |
| 2 | T | T | T | T | T | T | T | T | T | T | T | T | T | F |
| 3 | T | T | T | T | T | T | T | T | T | T | T | T | F | F |
| 4 | T | T | T | T | T | T | T | T | T | T | T | F | F | F |
| 5 | T | T | T | T | T | T | T | T | T | T | F | F | F | X |
| 6 | T | T | T | T | T | T | T | T | T | F | F | F | X | X |
| 7 | T | X | X | F | F | F | F | F | F | F | F | F | X | X |
| 8 | T | T | F | F | F | F | F | F | F | F | F | X | X | X |
| 9 | T | T | T | F | F | F | F | F | F | F | X | X | X | X |
| 10 | X | X | F | F | F | F | F | F | F | F | T | T | T | T |
| 11 | X | X | X | F | F | F | F | F | F | F | F | T | T | T |
| 12 | X | X | X | F | F | F | F | F | F | F | F | F | T | T |
| 13 | T | T | T | T | T | T | T | T | T | T | T | T | T | T |

Manner 83: The second information may indicate one format index combination of one or more consecutive time units. The one or more consecutive slots may be one or more consecutive slots starting from the first slot in slots indicated by the first-layer system information or the second-layer downlink control information message as slots in the flexible state. Alternatively, the one or more consecutive slots may be any consecutive slots in a periodicity. This is not limited in the application. The one or more consecutive time units include the second time unit, and the format index combination includes a format index of the second time unit. In other words, the second information may indicate, by indicating the format index of the second time unit, that the second time unit is in one or more of the following states: the off state, the receive state, or the flexible state, to further reduce the communication overheads. For example, the second time unit is a slot. The first access network device may preconfigure, for the terminal, a slot format combination set, an SFI-RNTI, and a message payload that correspond to the terminal. The slot format combination set includes a format combination index of the one or more consecutive slots, and each format combination index corresponds to one format combination of the one or more consecutive slots. A format of each slot refers to respective downlink states, receive states, or flexible states of all symbols in the slot. The format of the slot, namely, one or more of the following states of the slot: the off state, the receive state, or the flexible state, includes the off state, the receive state, or the flexible state of each symbol in the slot. In this way, a format combination indication of the one or more consecutive slots may indicate a status of the one or more slots. The SFI-RNTI is used by the first access network device to scramble the group-downlink control information message. The message payload indicates a location of the second information in the group-downlink control information message. In this way, the terminal may perform blind detection on a received downlink control information message based on the SFI-RNTI. If the terminal can successfully perform descrambling, it indicates that the terminal receives a downlink control information message indicating a status of a time unit, namely, the group-downlink control information message. In this way, the terminal may determine the second information from the group-downlink control information message based on the message payload. The terminal may determine, from the slot format combination set based on a format combination index indicated by the second information, a slot format combination corresponding to the format combination index. Finally, the terminal may traverse, based on the slot format combination, a slot format table predefined in a protocol, to determine the format of each of the one or more slots, in other words, determine that the second time unit is in the one or more of the following states: the off state, the receive state, or the flexible state. An example of the slot format table may also be Table 7. For a specific implementation in which the terminal traverses Table 7 based on the slot format combination, refer to related descriptions in the foregoing "layer three: group-DCI message". Details are not described again.

It may be understood that the second time unit is used as an example in the "manner 81" to the "manner 83". The foregoing indication manner for the second time unit may alternatively be applied to another time unit in the periodicity in which the second time unit is located. In other words, the group-downlink control information message may alternatively indicate a status of the another time unit, for example, indicate, by using the third information, that the third time unit is in the downlink state, the uplink state, or the flexible state. Details are not described again.

It should be noted that a time unit indicated in the group-downlink control information message may be a time unit indicated by the layer-A system information or the layer-B radio resource control message as a time unit in the flexible state. The group-downlink control information message may further indicate that the time unit is in one or more of the following states: the receive state, the flexible state, or the off state. Alternatively, a time unit indicated in the group-downlink control information message may be any time unit in a periodicity. In this case, if the system information or the radio resource control message already indicates that the time unit is in the receive state, the group-downlink control information message may further indicate that the time unit is in the off state. However, if the system information or the radio resource control message already indicates that the time unit is in the flexible state, the group-downlink control information message may still further indicate that the time unit is in one or more of the following states: the receive state, the flexible state, or the off state.

### Layer D: Device-downlink control information message

For example, the device-downlink control information message carries the second information. The second information may indicate, by using a format index, that the second time unit is in one or more of the following states: the off state, the receive state, or the flexible state. For a specific implementation, refer to related descriptions in the foregoing "layer C: group-downlink control information message". Details are not described again. However, different from the foregoing "layer C: group-downlink control information message", the device-downlink control information message may indicate a format index of a current slot, namely, a slot (including the second time unit) in which the device-downlink control information message is currently located, to more flexibly indicate a status at a finer granularity.

It should be noted that a time unit indicated in the device-downlink control information message may be a time unit indicated by the layer-A system information, the layer-B radio resource control message, or the layer-C device-downlink control information message as a time unit in the flexible state. In this case, the device-downlink control information message may further indicate that the time unit is in one or more of the following states: the off state, the receive state, or the flexible state. Alternatively, a time unit indicated in the device-downlink control information message may be any time unit in a periodicity. In this case, if the system information, the radio resource control message, or the device-downlink control information message already indicates that the time unit is in the receive state, the device-downlink control information message may further indicate that the time unit is in the off state. However, if the system information, the radio resource control message, or the device-downlink control information message already indicates that the time unit is in the flexible state, the device-downlink control information message may still further indicate that the time unit is in one or more of the following states: the off state, the receive state, or the flexible state.

It should be further noted that, in the foregoing four layers of signaling, for signaling at a same level, that the first information (which may also be replaced with the second information or point information) indicates that the first time unit is in one or more of the following states: the off state, the receive state, or the flexible state, and that the first information indicates that the first time unit is in one or more of the following states: the off state, the transmit state, or the flexible state may be implemented by using same signaling. For example, first information in one piece of signaling indicates that the first time unit is in the one or more of the following states: the off state, the receive state, or the flexible state, and also indicates that the first time unit is in the one or more of the following states: the off state, the transmit state, or the flexible state. Alternatively, that the first information (which may also be replaced with the second information or point information) indicates that the first time unit is in one or more of the following states: the off state, the receive state, or the flexible state, and that the first information indicates that the first time unit is in one or more of the following states: the off state, the transmit state, or the flexible state may be implemented by using different signaling. For example, first information in signaling 1 indicates that the first time unit is in the one or more of the following states: the off state, the receive state, or the flexible state, and first information in signaling 2 indicates that the first time unit is in the one or more of the following states: the off state, the transmit state, or the flexible state. The signaling 1 and the signaling 2 may have different signaling formats, for example, are DCI in different formats. Alternatively, the signaling 1 and the signaling 2 carry indication information. For example, the indication information occupies one bit. If a value of the bit in the signaling 1 is 1, it means that the first information in the signaling 1 indicates that the first time unit is in the one or more of the following states: the off state, the receive state, or the flexible state; or if a value of the bit in the signaling 2 is 0, it means that the first information in the signaling 2 indicates that the first time unit is in the one or more of the following states: the off state, the transmit state, or the flexible state. Optionally, the first information in the signaling 1 may be carried after the indication information, and the first information in the signaling 2 may also be carried after the indication information, to help the terminal to obtain the first information.

Optionally, with reference to the foregoing embodiment, in a third possible application scenario, the method provided in the embodiment of the application may further include: The first access network device sends fourth information to the terminal. Correspondingly, the terminal receives the fourth information from the first access network device.

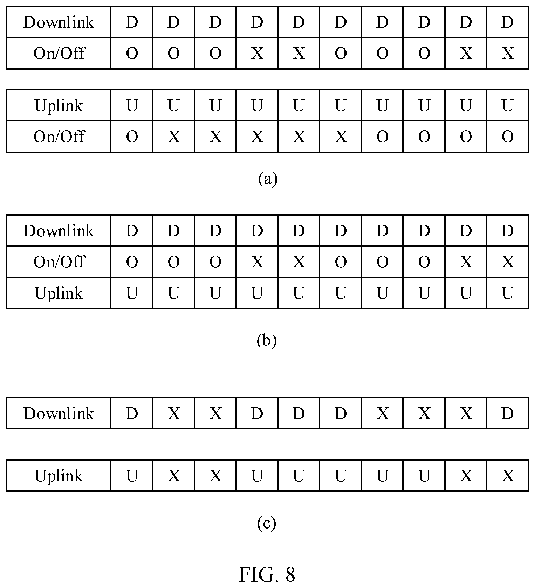

The method in the embodiment of the application is further applicable to the FDD system. Each time unit in the FDD system may have two transmission functions, to be specific, is for uplink transmission or downlink transmission. In this case, as shown in (a) in FIG. 8, for the first time unit, the fourth information may indicate that the first time unit is an uplink time unit or a downlink time unit. That the first time unit is an uplink time unit indicates that the first time unit is associated with an uplink carrier. In this case, the off state or the on state of the first time unit is applicable to the uplink carrier. For example, when the first time unit is in the off state, the first access network device may not receive an uplink signal on the uplink carrier associated with the first time unit. That the first time unit is a downlink time unit indicates that the first time unit is associated with a downlink carrier. In this case, the off state or the on state of the first time unit is applicable to the downlink carrier. For example, when the first time unit is in the off state, the first access network device may not send a downlink signal on the downlink carrier associated with the first time unit. For example, the fourth information may indicate, by using one bit, that the first time unit is the uplink time unit or the downlink time unit. For example, if a value of the bit is 1, it indicates that the first time unit is the uplink time unit; or if a value of the bit is 0, it indicates that the first time unit is the downlink time unit. Alternatively, if a value of the bit is 0, it indicates that the first time unit is the uplink time unit; or if a value of the bit is 1, it indicates that the first time unit is the downlink time unit. In this way, the terminal may determine, based on the fourth information, whether the off state or the on state of the first time unit is applicable to the uplink transmission or the downlink transmission, so that when the first time unit is off in an uplink direction, the terminal may still receive the downlink signal in the first time unit; or when the first time unit is off in a downlink direction, the terminal may still send the uplink signal in the first time unit, to balance energy saving and data communication. The fourth information and the first information may be carried in a same message, for example, carried in one or more of the following messages: the system information, the radio resource control message, or the downlink control information message; or the fourth information and the first information may be carried in different messages. Alternatively, as shown in (b) in FIG. 8, the first time unit may be an uplink time unit or a downlink time unit by default without signaling indication, to further reduce the communication overheads.

It may be understood that, that the fourth information indicates that the first time unit is the uplink time unit or the downlink time unit is merely an example, and constitutes no limitation. The fourth information may alternatively indicate that another time unit, for example, the second time unit, is an uplink time unit or a downlink time unit. For a specific implementation, refer to the foregoing for understanding. Details are not described again. In addition, if the terminal does not receive the fourth information from the first access network device, the terminal may consider by default that the off state or the on state of the first time unit is applicable to both the uplink transmission and the downlink transmission.

It may be understood that, in the FDD system, all time units in one periodicity may be for the uplink transmission and the downlink transmission. Therefore, the first access network device may indicate (for example, by using the first information) only an off state or an on state of a time unit (for example, the first time unit). For example, refer to FIG. 8. In FIG. 8, "D" represents the downlink state, "F" represents the flexible state, "U" represents the uplink state, "O" represents the on state, and "X" represents the off state. As shown in (a) or (b) in FIG. 8, the first information may separately indicate that the first time unit is in the off state or the on state; or as shown in (c) in FIG. 8, the first information may jointly indicate the off state or the on state of the first time unit. For a specific implementation, refer to the foregoing related descriptions of the first information. Details are not described again.

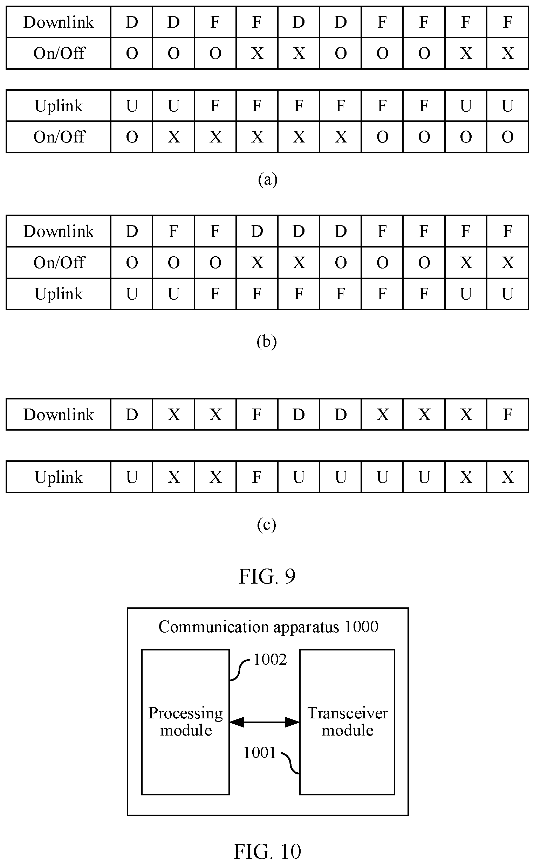

Optionally, refer to FIG. 9. In FIG. 9, "D" represents the downlink state, "F" represents the flexible state, "U" represents the uplink state, "O" represents the on state, and "X" represents the off state. As shown in (a), (b), and (c) in FIG. 9, in the FDD system, the first access network device may further jointly or separately indicate, by using some information, that some time units are in the flexible state. For a specific implementation, refer to the foregoing related descriptions of the flexible state. Details are not described again.

Optionally, with reference to the foregoing embodiment, in a fourth possible application scenario, the method provided in the embodiment of the application may further include: The first access network device sends a configuration message to a second access network device. Correspondingly, the second access network device receives the configuration message from the first access network device.

The second access network device may be located near the first access network device, for example, may be a neighboring access network device of the first access network device; or may be any other possible access network device. This is not limited. In some examples, the configuration message may be a configuration update (configuration update) message or any other possible configuration message. The configuration message may indicate the first information, to be specific, indicate that the first time unit is in the off state or the on state. For example, an information element, for example, a TDD Shutdown Configuration information element or an FDD Shutdown Configuration information element, of the configuration message or any possible information element in the full-duplex system may indicate, by using some bits, that the first time unit is in the off state or the on state. For a specific implementation principle, refer to the foregoing related descriptions of the first information. Details are not described again. Optionally, the configuration message may further indicate the periodicity in which the first time unit is located and the reference subcarrier spacing. In this way, the second access network device may adjust an uplink/downlink/transmit/receive state of a signal of the second access network device based on the configuration message, to avoid signal interference between the devices. It may be understood that, that the configuration message indicates that the first time unit is in the off state or the on state is merely an example. In some other examples, the configuration message may alternatively indicate that another time unit, for example, the second time unit or the third time unit, is in the off state or the on state. This is not limited in the application.

Optionally, with reference to the foregoing embodiment, in a fifth possible application scenario, the indication of the off state or the on state of the time unit is also applicable to a carrier on which a current notification is located, a carrier group, or a power amplifier (power amplifier, PA) group, where the carrier group or the PA group includes at least one carrier.

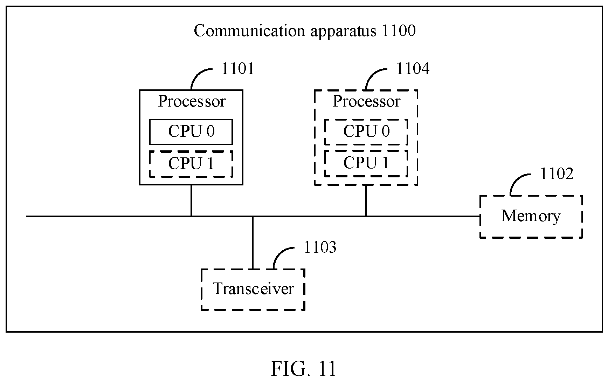

With reference to FIG. 5 to FIG. 9, the foregoing describes in detail the communication method provided in embodiments of the application. With reference to FIG. 10 and FIG. 11, the following describes in detail a communication apparatus configured to perform the communication method provided in embodiments of the application.

For example, FIG. 10 is a first schematic diagram of a structure of a communication apparatus according to an embodiment of the application. As shown in FIG. 10, the communication apparatus 1000 may be used in the communication system shown in FIG. 4, and includes a transceiver module 1001 and a processing module 1002.

In some embodiments, the communication apparatus 1000 may perform some functions of the first access network device in the method shown in FIG. 5.

The processing module 1002 is configured to determine first information. The transceiver module 1001 is configured to send the first information to a terminal. The first information indicates that a first time unit is in an off state or an on state.

In a possible implementation, the first information is carried in one or more of the following messages: system information, a radio resource control message, or a downlink control information message.

Optionally, the processing module 1002 is further configured to scramble the downlink control information message based on a preset identifier, to control the transceiver module 1001 to send the scrambled downlink control information message to the terminal.

Optionally, the downlink control information message is a device group-level downlink control information message.

In a possible implementation, the transceiver module 1001 is further configured to send second information to the terminal, where the second information indicates that a second time unit is in the off state or the on state.

Optionally, the second information and the first information are carried in a same message, or are carried in different messages.

Optionally, that the second information and the first information are carried in different messages means: The first information is carried in the system information, and the second information is carried in the radio resource control message or the downlink control information message; or the first information is carried in the radio resource control message, and the second information is carried in the downlink control information message.

Optionally, the first time unit and the second time unit are a same time unit. Alternatively, the first time unit and the second time unit are different time units.

In a possible implementation, the transceiver module 1001 is further configured to send third information to the terminal. The third information indicates that a third time unit is in one or more of the following states: the off state, a downlink state, an uplink state, a receive state, a transmit state, or a flexible state.

Optionally, the third information and the first information are carried in a same message, or the third information and the second information are carried in a same message. Alternatively, the third information and the first information are carried in different messages, or the third information and the second information are carried in different messages.

Optionally, the first time unit and the third time unit are a same time unit, or the second time unit and the third time unit are a same time unit.

In a possible implementation, the transceiver module 1001 is further configured to send a configuration message to a second access network device, where the configuration message indicates the first information. Optionally, the configuration message may further indicate a periodicity in which the first time unit is located and a reference subcarrier spacing.

In a possible implementation, the transceiver module 1001 is further configured to send fourth information to the terminal. The fourth information indicates that the first time unit is an uplink time unit or a downlink time unit.

Optionally, the transceiver module 1001 may alternatively include a sending module and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10). The storage module stores a program or instructions. When the processing module 1002 executes the program or the instructions, the communication apparatus 1000 is enabled to perform some functions of an assistant in the method shown in FIG. 5.

It should be understood that the processing module in the communication apparatus 1000 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1000 may be a network device, for example, the first access network device, may be a chip (system) or another part or component that may be disposed in the network device, or may be an apparatus including the network device. This is not limited in the application.

In addition, for technical effects of the communication apparatus 1000, refer to corresponding technical effects in the method shown in FIG. 5. Details are not described herein again.

In some other embodiments, the communication apparatus 1000 may perform some functions of the terminal in the method shown in FIG. 5.

The transceiver module 1001 is configured to receive first information from a first access network device. The processing module 1002 is configured to control, based on the first information, the transceiver module 1001 to receive a downlink signal. The first information indicates that a first time unit is in an off state or an on state.

In a possible implementation, if the communication apparatus 1000 determines that the first time unit is in the off state, the communication apparatus 1000 does not receive the downlink signal in the first time unit. Alternatively, if the communication apparatus 1000 determines that the first time unit is in the on state, the communication apparatus 1000 receives the downlink signal in the first time unit. Optionally, if the communication apparatus 1000 determines that the first time unit is in the off state, the communication apparatus 1000 sends an uplink signal in the first time unit.

In a possible implementation, the first information is carried in one or more of the following messages: system information, a radio resource control message, or a downlink control information message.

Optionally, the downlink control information message is a device group-level downlink control information message.

In a possible implementation, the transceiver module 1001 is further configured to receive second information from the first access network device, where the second information indicates that a second time unit is in the off state or the on state.

Optionally, the second information and the first information are carried in a same message, or are carried in different messages.

Optionally, that the second information and the first information are carried in different messages means: The first information is carried in the system information, and the second information is carried in the radio resource control message or the downlink control information message; or the first information is carried in the radio resource control message, and the second information is carried in the downlink control information message.

Optionally, the first time unit and the second time unit are a same time unit, or are different time units.

In a possible implementation, the transceiver module 1001 is further configured to receive third information from the first access network device. The third information indicates that a third time unit is in one or more of the following states: the off state, a downlink state, an uplink state, a receive state, a transmit state, or a flexible state.

Optionally, the third information and the first information are carried in a same message, or are carried in different messages; or the third information and the second information are carried in a same message, or are carried in different messages.

Optionally, the first time unit and the third time unit are a same time unit, or the first time unit and the second time unit are a same time unit.

Optionally, the transceiver module 1001 may alternatively include a sending module and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10). The storage module stores a program or instructions. When the processing module 1002 executes the program or the instructions, the communication apparatus 1000 is enabled to perform some functions of an assistant in the method shown in FIG. 5.

It should be understood that the processing module in the communication apparatus 1000 may be implemented by a processor or a processor-related circuit component, and may be a processor or a processing unit. The transceiver module may be implemented by a transceiver or a transceiver-related circuit component, and may be a transceiver or a transceiver unit.

It should be noted that the communication apparatus 1000 may be a network device, for example, the terminal, may be a chip (system) or another part or component that may be disposed in the network device, or may be an apparatus including the network device. This is not limited in the application.

In addition, for technical effects of the communication apparatus 1000, refer to corresponding technical effects in the method shown in FIG. 5. Details are not described herein again.

For example, FIG. 11 is a second schematic diagram of a structure of a communication apparatus according to an embodiment of the application. The communication apparatus may be a terminal or a network device, or may be a chip (system) or another part or component that may be disposed in the terminal or the network device. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, may be connected through a communication bus.

The following describes the components of the communication apparatus 1100 in detail with reference to FIG. 11.

The processor 1101 is a control center of the communication apparatus 1100, and may be a processor, may be a collective name of a plurality of processing elements, or may be referred to as a logic circuit. For example, the processor 1101 is one or more central processing units (central processing unit, CPU), may be an application-specific integrated circuit (application-specific integrated circuit, ASIC), or is configured as one or more integrated circuits for implementing embodiments of the application, for example, one or more microprocessors (digital signal processor, DSP) or one or more field programmable gate arrays (field-programmable gate array, FPGA).

Optionally, the processor 1101 may run or execute a software program stored in the memory 1102 and invoke data stored in the memory 1102, to perform the first access network device or the terminal in the method shown in FIG. 5.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 and a processor 1104 shown in FIG. 11. Each of the processors may be a single-core (single-CPU) processor or may be a multi-core (multi-CPU) processor. The processor herein may be one or more devices, circuits, and/or processing cores configured to process data (for example, a computer program or instructions).

The memory 1102 is configured to store a software program for executing the solutions of the application, and the processor 1101 controls the execution, so that a function of the network device in the method shown in FIG. 3 or FIG. 5 is performed.

Optionally, the memory 1102 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction structure or a data structure and that is accessible to a computer, but is not limited thereto. The memory 1102 and the processor 1101 may be integrated together, or may exist independently, and is coupled to the processor 1101 through an interface circuit, namely, an input/output interface (not shown in FIG. 11), of the communication apparatus 1100. This is not specifically limited in the embodiment of the application.

The transceiver 1103 is configured to communicate with another communication apparatus. For example, the communication apparatus 1100 is the terminal, and the transceiver 1103 may be configured to communicate with a network device or another terminal. For another example, the communication apparatus 1100 is the network device, and the transceiver 1103 may be configured to communicate with a terminal or another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 and the processor 1101 may be integrated together, or may exist independently, and is coupled to the processor 1101 through an interface circuit (not shown in FIG. 11) of the communication apparatus 1100. This is not specifically limited in the embodiment of the application.

It should be noted that the structure of the communication apparatus 1100 shown in FIG. 11 does not constitute a limitation on the communication apparatus. An actual communication apparatus may include more or fewer components than those shown in the figure, combine some components, or have different component arrangement.

In addition, for technical effects of the communication apparatus 1100, refer to the technical effects of the communication method in the foregoing method embodiments. Details are not described herein again.

An embodiment of the application provides a communication system. The communication system includes one or more terminals and one or more network devices.

It should be understood that the processor in embodiments of the application may be a CPU, or may be another general-purpose processor, a DSP, an ASIC, a field programmable gate array FPGA or another programmable logic device, a discrete gate or a transistor logic device, a discrete hardware component, or the like. The general-purpose processor may be a microprocessor, or the processor may be any conventional processor or the like.

It should be further understood that the memory in embodiments of the application may be a volatile memory or a nonvolatile memory, or may include a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM, used as an external cache. By way of example instead of limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used for implementation, the foregoing embodiments may be implemented completely or partially in a form of a computer program product. The computer program product includes one or more computer instructions or computer programs. When the computer instruction, the computer program, or the instruction is loaded or executed on a computer, the procedures or functions according to embodiments of the application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between associated objects, but may alternatively indicate an "and/or" relationship. For details, refer to the context for understanding.

In the application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of the application. The execution sequences of the processes should be determined based on functions and internal logic of the processes, and should not be construed as any limitation on the implementation processes of embodiments of the application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of the application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in the application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, functional units in embodiments of the application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of the application essentially, the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of the application. The foregoing storage medium includes any medium that can store program code, such as a USB flash drive, a removable hard disk, a ROM, a RAM, a magnetic disk, or an optical disc.

The foregoing descriptions are merely specific implementations of the application, but are not intended to limit the protection scope of the application. Any variation or replacement readily figured out by a person skilled in the art within the technical scope disclosed in the application shall fall within the protection scope of the application. Therefore, the protection scope of the application shall be subject to the protection scope of the claims.

## Claims

1. A communication method, wherein the method comprises:
determining, by a first access network device, first information, wherein the first information indicates that a first time unit is in an off state or an on state; and
sending, by the first access network device, the first information to a terminal.

2. The method according to claim 1, wherein the first information is carried in one or more of the following messages: system information, a radio resource control message, or a downlink control information message.

3. The method according to claim 2, wherein the system information indicates that the first time unit is for uplink transmission, or is not for uplink transmission.

4. The method according to claim 2, wherein the downlink control information message is a message scrambled based on a preset identifier; and the sending, by the first access network device, the first information to a terminal comprises:
scrambling, by the first access network device, the downlink control information message based on the preset identifier; and
sending, by the first access network device, the scrambled downlink control information message to the terminal.

5. The method according to claim 2, wherein the downlink control information message is a device group-level downlink control information message.

6. The method according to any one of claims 1 to 5, wherein the method further comprises:
sending, by the first access network device, second information to the terminal, wherein the second information indicates that a second time unit is in the off state or the on state.

7. The method according to claim 6, wherein the second information and the first information are carried in a same message, or are carried in different messages.

8. The method according to claim 7, wherein that the second information and the first information are carried in different messages means: the first information is carried in the system information, and the second information is carried in the radio resource control message or the downlink control information message; or the first information is carried in the radio resource control message, and the second information is carried in the downlink control information message.

9. The method according to any one of claims 6 to 8, wherein the second time unit and the first time unit are different time units, or may be a same time unit.

10. The method according to any one of claims 6 to 9, wherein the method further comprises:
sending, by the first access network device, third information to the terminal, wherein the third information indicates that a third time unit is in one or more of the following states: the off state, a downlink state, an uplink state, a receive state, a transmit state, or a flexible state.

11. The method according to claim 10, wherein the third information and the first information are carried in a same message, or the third information and the second information are carried in a same message; or the third information and the first information are carried in different messages, or the third information and the second information are carried in different messages.

12. The method according to claim 10 or 11, wherein the first time unit and the third time unit are a same time unit, or the second time unit and the third time unit are a same time unit.

13. The method according to any one of claims 1 to 12, wherein the method further comprises:
sending, by the first access network device, a configuration message to a second access network device, wherein the configuration message indicates the first information.

14. The method according to any one of claims 1 to 13, wherein the method further comprises:
sending, by the first access network device, fourth information to the terminal, wherein the fourth information indicates that the first time unit is an uplink time unit or a downlink time unit.

15. A communication method, wherein the method comprises:
receiving, by a terminal, first information from a first access network device, wherein the first information indicates that a first time unit is in an off state or an on state; and
receiving, by the terminal, a downlink signal based on the first information.

16. The method according to claim 15, wherein if the terminal determines that the first time unit is in the off state, the terminal does not receive the downlink signal in the first time unit; or if the terminal determines that the first time unit is in the on state, the terminal receives the downlink signal in the first time unit.

17. The method according to claim 16, wherein if the terminal determines that the first time unit is in the off state, the terminal sends an uplink signal in the first time unit.

18. The method according to claim 16 or 17, wherein the first information is carried in one or more of the following messages: system information, a radio resource control message, or a downlink control information message.

19. The method according to claim 18, wherein the system information indicates that the first time unit is for uplink transmission, or is not for uplink transmission.

20. The method according to claim 18, wherein the downlink control information message is a message scrambled based on a preset identifier.

21. The method according to claim 18, wherein the downlink control information message is a device group-level downlink control information message.

22. The method according to any one of claims 15 to 21, wherein the method further comprises:
receiving, by the terminal, second information from the first access network device, wherein the second information indicates that a second time unit is in the off state or the on state.

23. The method according to claim 22, wherein the second information and the first information are carried in a same message, or are carried in different messages.

24. The method according to claim 23, wherein that the second information and the first information are carried in different messages means: the first information is carried in the system information, and the second information is carried in the radio resource control message or the downlink control information message; or the first information is carried in the radio resource control message, and the second information is carried in the downlink control information message.

25. The method according to claim 23 or 24, wherein the first time unit and the second time unit are a same time unit, or are different time units.

26. The method according to any one of claims 22 to 25, wherein the method further comprises:
receiving, by the terminal, third information from the first access network device, wherein the third information indicates that a third time unit is in one or more of the following states: the off state, a downlink state, an uplink state, a receive state, a transmit state, or a flexible state.

27. The method according to claim 26, wherein the third information and the first information are carried in a same message, or are carried in different messages; or the third information and the second information are carried in a same message, or are carried in different messages.

28. The method according to claim 26 or 27, wherein the first time unit and the third time unit are a same time unit, or the second time unit and the third time unit are a same time unit.

29. The method according to any one of claims 15 to 28, wherein the method further comprises:
receiving, by the terminal, fourth information from the first access network device, wherein the fourth information indicates that the first time unit is an uplink time unit or a downlink time unit.

30. A communication apparatus, wherein the apparatus comprises a transceiver module and a processing module, wherein
the processing module is configured to determine first information, wherein the first information indicates that a first time unit is in an off state or an on state; and
the transceiver module is configured to send the first information to a terminal.

31. The apparatus according to claim 30, wherein the first information is carried in one or more of the following messages: system information, a radio resource control message, or a downlink control information message.

32. The apparatus according to claim 31, wherein the system information indicates that the first time unit is for uplink transmission, or is not for uplink transmission.

33. The apparatus according to claim 31, wherein the downlink control information message is a message scrambled based on a preset identifier; the processing module is further configured to scramble the downlink control information message based on the preset identifier; and the transceiver module is further configured to send the scrambled downlink control information message to the terminal.

34. The apparatus according to claim 31, wherein the downlink control information message is a device group-level downlink control information message.

35. The apparatus according to any one of claims 30 to 34, wherein the transceiver module is further configured to send second information to the terminal, wherein the second information indicates that a second time unit is in the off state or the on state.

36. The apparatus according to claim 35, wherein the second information and the first information are carried in a same message, or are carried in different messages.

37. The apparatus according to claim 36, wherein that the second information and the first information are carried in different messages means: the first information is carried in the system information, and the second information is carried in the radio resource control message or the downlink control information message; or the first information is carried in the radio resource control message, and the second information is carried in the downlink control information message.

38. The apparatus according to any one of claims 35 to 37, wherein the second time unit and the first time unit are different time units, or may be a same time unit.

39. The apparatus according to any one of claims 35 to 38, wherein the transceiver module is configured to send third information to the terminal, wherein the third information indicates that a third time unit is in one or more of the following states: the off state, a downlink state, an uplink state, a receive state, a transmit state, or a flexible state.

40. The apparatus according to claim 39, wherein the third information and the first information are carried in a same message, or the third information and the second information are carried in a same message; or the third information and the first information are carried in different messages, or the third information and the second information are carried in different messages.

41. The apparatus according to claim 39 or 40, wherein the first time unit and the third time unit are a same time unit, or the second time unit and the third time unit are a same time unit.

42. The apparatus according to any one of claims 30 to 41, wherein the transceiver module is further configured to send a configuration message to a second access network device, wherein the configuration message indicates the first information.

43. The apparatus according to any one of claims 30 to 42, wherein the transceiver module is further configured to send fourth information to the terminal, wherein the fourth information indicates that the first time unit is an uplink time unit or a downlink time unit.

44. A communication apparatus, wherein the apparatus comprises a transceiver module and a processing module, wherein
the transceiver module is configured to receive first information from a first access network device, wherein the first information indicates that a first time unit is in an off state or an on state; and
the processing module is configured to receive a downlink signal based on the first information.

45. The apparatus according to claim 44, wherein if the communication apparatus determines that the first time unit is in the off state, the communication apparatus does not receive the downlink signal in the first time unit; or if the communication apparatus determines that the first time unit is in the on state, the communication apparatus receives the downlink signal in the first time unit.

46. The apparatus according to claim 45, wherein if the terminal determines that the first time unit is in the off state, the terminal sends an uplink signal in the first time unit.

47. The apparatus according to claim 45 or 46, wherein the first information is carried in one or more of the following messages: system information, a radio resource control message, or a downlink control information message.

48. The apparatus according to claim 47, wherein the system information indicates that the first time unit is for uplink transmission, or is not for uplink transmission.

49. The apparatus according to claim 47, wherein the downlink control information message is a message scrambled based on a preset identifier.

50. The apparatus according to claim 47, wherein the downlink control information message is a device group-level downlink control information message.

51. The apparatus according to any one of claims 44 to 50, wherein the transceiver module is further configured to receive second information from the first access network device, wherein the second information indicates that a second time unit is in the off state or the on state.

52. The apparatus according to claim 51, wherein the second information and the first information are carried in a same message, or are carried in different messages.

53. The apparatus according to claim 52, wherein that the second information and the first information are carried in different messages means: the first information is carried in the system information, and the second information is carried in the radio resource control message or the downlink control information message; or the first information is carried in the radio resource control message, and the second information is carried in the downlink control information message.

54. The apparatus according to claim 52 or 53, wherein the first time unit and the second time unit are a same time unit, or are different time units.

55. The apparatus according to any one of claims 51 to 54, wherein the transceiver module is further configured to receive third information from the first access network device, wherein the third information indicates that a third time unit is in one or more of the following states: the off state, a downlink state, an uplink state, a receive state, a transmit state, or a flexible state.

56. The apparatus according to claim 55, wherein the third information and the first information are carried in a same message, or are carried in different messages; or the third information and the second information are carried in a same message, or are carried in different messages.

57. The apparatus according to claim 55 or 56, wherein the first time unit and the third time unit are a same time unit, or the second time unit and the third time unit are a same time unit.

58. The apparatus according to any one of claims 44 to 57, wherein the transceiver module is further configured to receive fourth information from the first access network device, wherein the fourth information indicates that the first time unit is an uplink time unit or a downlink time unit.

59. A communication apparatus, comprising a processor, wherein the processor is configured to perform the method according to any one of claims 1 to 14, or perform the method according to any one of claims 15 to 29.

60. A communication apparatus, comprising a processor and a memory, wherein the memory is configured to store computer instructions; and when the processor executes the instructions, the apparatus is enabled to perform the method according to any one of claims 1 to 14, or perform the method according to any one of claims 15 to 29.

61. A communication apparatus, comprising a processor coupled to a memory, wherein the memory is configured to store instructions, and the processor is configured to execute the instructions, to enable the communication apparatus to perform the method according to any one of claims 1 to 14, or perform the method according to any one of claims 15 to 29.

62. A communication system, comprising a first access network device configured to perform the method according to any one of claims 1 to 14 and a terminal configured to perform the method according to any one of claims 15 to 29.

63. A computer-readable storage medium, comprising a computer program, wherein when the computer program is run on a computer, the method according to any one of claims 1 to 29 is performed.

64. A computer program product, wherein the computer program product comprises a computer program; and when the computer program is run on a computer, the method according to any one of claims 1 to 29 is performed.
